# EUROPEAN PATENT APPLICATION

(11) **EP 4 818 132 A1**
(43) Date of publication of application: **07.10.2026**
(21) Application number: 24910283.1
(22) Date of filing: 31.10.2024
(51) Int. Cl.: C03C 10/00

(54) **TOUGHENED GLASS CERAMIC WITH HIGH STRENGTH AND USE THEREOF**

(30) Priority: 25.12.2023 CN 202311800642
(71) Applicant: Chongqing Aureavia Hi-Tech Glass Co., Ltd., Chongqing 400713 (CN)
(72) Inventor: XIE, Xiaolan, Chongqing 400713 (CN); ZHOU, Jingpeng, Chongqing 400713 (CN); HUANG, Hao, Chongqing 400713 (CN); RAN, Rongxia, Chongqing 400713 (CN)
(74) Representative: Buzzi, Notaro & Antonielli d'Oulx S.p.A.
(86) International application number: PCT/CN2024/128844
(87) International publication number: WO 2025/139345

(57) **Abstract**

The present disclosure provides a strengthened glass ceramic with a high strength and the use thereof. The strengthened glass ceramic comprises a main crystalline phase, i.e., a (Zn, Mg)Al₂O₄ crystalline phase, and a secondary crystalline phase, i.e., a tetragonal ZrO₂ crystalline phase. The strengthened glass ceramic includes a compressive stress layer region extending from a surface of the strengthened glass ceramic to a compression depth, and there is a tensile stress layer region inside the strengthened glass ceramic. The depth DOL_0 of a compressive stress layer of the strengthened glass ceramic is greater than or equal to 0.21t, wherein t is the thickness of the strengthened glass ceramic; |CT_AV|≥70 MPa; and the strengthened glass ceramic is endowed with a specific stress structure by satisfying the DOL_0 and |CT_AV|, and therefore the strengthened glass ceramic has good drop impact resistance and a high mechanical strength.

## Description

The present disclosure claims the priority to Chinese Patent Application No. 202311800642.5, titled "STRENGTHENED GLASS CERAMIC WITH HIGH STRENGTH AND USE THEREOF", filed before the China National Intellectual Property Administration on December 25, 2023, which is incorporated into the present disclosure by reference in its entirety.

### TECHNICAL FIELD

The present disclosure relates to the technical field of glass ceramics, in particular to a strengthened glass ceramic with a high strength and the use thereof.

### BACKGROUND

Common situations of breakage in protective glass for electronic device are drop breakage caused by falling. Analysis of the drop process shows that it is generally due to the collision of the glass surface with sharp objects of equivalent or greater hardness (such as fine sand, cement, or small stones), causing local damage and forming a hemispherical crack propagation source at the damage point. Part of the collision energy is attenuated, and the residual energy further propagates. When the surface compressive stress level of the glass is insufficient to offset the residual energy, crack propagation will penetrate the glass surface area. When the longitudinal crack penetrates through a depth of a compressive stress layer and reaches the tensile stress layer region, the crack rapidly propagates in the tensile stress region, causing the crack to penetrate the entire glass, thereby leading to glass breakage or fracture.

It can be seen that the depth of the compressive stress layer and the situation of deep-layer stress of the glass product are closely related to its drop damage resistance performance. When the depth of the compressive stress layer is constant, the greater the deep-layer stress, the more residual energy from drop collision that the surface compressive stress level can offset. When the surface compressive stress level is insufficient to offset the residual energy from drop collision, the deeper the depth of the compressive stress layer possessed by the glass, the more beneficial it is to offset the energy driving crack propagation.

Therefore, in order to further improve the drop impact resistance performance of glass ceramics, it is necessary to develop a strengthened glass ceramic with a high mechanical strength, possessing both a relatively large deep-layer stress and an ultra-high depth of the compressive stress layer, especially a high-strength transparent strengthened glass ceramic with excellent light transmittance or transmittance.

### SUMMARY

The purpose of the present disclosure is to provide a strengthened glass ceramic with a high strength and the use thereof. The strengthened glass ceramic has a relatively large deep-layer stress and an ultra-high depth of the compressive stress layer, forming a specific stress structure, thereby endowing the strengthened glass ceramic with excellent drop impact resistance performance.

The technical solutions provided by the present disclosure are as follows:
A first aspect provides a strengthened glass ceramic, wherein the strengthened glass ceramic comprises a main crystalline phase of a (Zn, Mg)Al₂O₄ crystalline phase and a secondary crystalline phase of a tetragonal ZrO₂ crystalline phase; the strengthened glass ceramic comprises a compressive stress layer region extending from a surface of the strengthened glass ceramic to a compression depth, and has a tensile stress layer region internally; the strengthened glass ceramic has a depth of the compressive stress layer DOL_0 ≥ 0.21t, preferably, 0.21t ≤ DOL_0 ≤ 0.25t, wherein t is a thickness of the strengthened glass ceramic; and the strengthened glass ceramic has a |CT_AV| ≥ 70 MPa, preferably, 70 MPa ≤ |CT_AV| ≤ 110 MPa. The strengthened glass ceramic of the present disclosure has the (Zn, Mg)Al₂O₄ crystalline phase (in the present disclosure, the (Zn, Mg)Al₂O₄ is used to represent the solid solution of zinc spinel and magnesium spinel, also known as zinc aluminum spinel-magnesium aluminum spinel solid solution, zinc-magnesium spinel solid solution, zinc spinel-magnesium spinel solid solution, zinc-magnesium aluminum spinel solid solution) with high hardness and high modulus as the main crystalline phase, endowing the strengthened glass ceramic with high intrinsic or inherent strength. Simultaneously, the ultra-high depth of the compressive stress layer and the relatively large deep-layer stress possessed by the strengthened glass ceramic of the present disclosure endow the strengthened glass ceramic with a specific stress structure. Through the synergistic effect of the specific crystalline phase structure and the specific stress structure, the strengthened glass ceramic of the present disclosure possesses an ultra-high mechanical strength, particularly imparting excellent drop impact resistance performance to the strengthened glass ceramic.

In some embodiments of the present disclosure, a total content of the (Zn, Mg)Al₂O₄ crystalline phase and the tetragonal ZrO₂ crystalline phase is 25.00 wt% to 70.00 wt%, preferably 30.00 wt% to 50.00 wt%, based on a mass of the strengthened glass ceramic, wherein a ratio of the (Zn, Mg)Al₂O₄ crystalline phase to the tetragonal ZrO₂ crystalline phase (i.e., a mass ratio of the (Zn, Mg)Al₂O₄ crystalline phase to the tetragonal ZrO₂ crystalline phase) is 1.00 to 18.00, preferably 1.00 to 15.00; and/or, in the strengthened glass ceramic, an average crystal size of the (Zn, Mg)Al₂O₄ crystalline phase is 3.0 nm to 10.0 nm, preferably 4.0 nm to 7.5 nm, more preferably 4.5 nm to 7.5 nm; and/or, the strengthened glass ceramic is transparent within a visible light range. When the total crystalline phase content W in the strengthened glass ceramic, the ratio (mass ratio Z) of the (Zn, Mg)Al₂O₄ crystalline phase to the tetragonal ZrO₂ crystalline phase, and the average crystal size of the (Zn, Mg)Al₂O₄ crystalline phase are within the above ranges, a specific crystalline phase structure is imparted to the strengthened glass ceramic. This crystalline phase structure not only facilitates obtaining the desired stress structure when a glass ceramic for chemical strengthening is chemically strengthened, but also enables the strengthened glass ceramic obtained after strengthening to achieve excellent optical light transmittance.

In some embodiments of the present disclosure, a composition at a center of the strengthened glass ceramic comprises: SiO₂ 35.00 mol% to 60.00 mol%, Al₂O₃ 20.00 mol% to 40.00 mol%, ZrO₂ 2.00 mol% to 8.00 mol%, MgO 3.00 mol% to 7.50 mol%, ZnO 7.00 mol% to 13.00 mol%, Na₂O 1.00 mol% to 10.00 mol%, and Li₂O 2.50 mol% to 10.00 mol%, based on a mole percentage of oxides. By employing the above glass formulation scheme, it facilitates ensuring the preparation of the glass ceramic for chemical strengthening that possesses a high intrinsic strength and has spinel as the main crystalline phase, this is done so as to help to obtain a strengthened glass ceramic with the desired stress structure.

In some embodiments of the present disclosure, the strengthened glass ceramic comprises 15.00 wt% to 45.00 wt% of the (Zn, Mg)Al₂O₄ crystalline phase based on the strengthened glass ceramic. The (Zn, Mg)Al₂O₄ crystal is a crystal with high hardness and high modulus. By precipitating an appropriate amount of the (Zn, Mg)Al₂O₄ in the glass ceramic, high intrinsic or inherent strength can be imparted to the glass ceramic. Simultaneously, by controlling a content of the (Zn, Mg)Al₂O₄ crystalline phase, the glass ceramic satisfies a specific crystalline phase structure, which facilitates ensuring that the glass ceramic obtains an ideal stress structure through chemical strengthening.

In some embodiments of the present disclosure, W_{[(Zn, Mg)Al2O4]} is a weight percentage of the (Zn, Mg)Al₂O₄ crystalline phase based on the strengthened glass ceramic, W_{[Al2O3]} is a weight percentage of Al₂O₃ based on the strengthened glass ceramic, W_{[MgO]} is a weight percentage of MgO based on the strengthened glass ceramic, and W_{[ZnO]} is a weight percentage of ZnO based on the strengthened glass ceramic, $A = \left(1-{W}_{\left[\left(Zn, Mg\right)Al2O4\right]}/2\right) \times {W}_{\left[Al2O3\right]} / 2 ,$ $B = \left(1-{W}_{\left[\left(Zn, Mg\right)Al2O4\right]}\right) \times \left({W}_{\left[MgO\right]}+{W}_{\left[ZnO\right]}\right) ,$ $C = A / B ,$ and in the strengthened glass ceramic, 1.50 ≤ C ≤ 1.85. By optimizing the composition and structure, so that the crystalline phase content of the (Zn, Mg)Al₂O₄ crystalline phase, and the contents of Al₂O₃, MgO, and ZnO in the glass ceramic satisfy the range of the above characteristic C, it can ensure that the glass ceramic for chemical strengthening obtains the desired stress structure after chemical strengthening, thereby ensuring the strengthened glass ceramic to achieve a high mechanical strength, especially excellent damage resistance performance.

In some embodiments of the present disclosure, a value of A is 10.00% to 25.00%, preferably 14.00% to 25.00%; and/or,
a value of B is 7.50% to 12.50%, preferably 8.00% to 12.00%. By making the values of A and B satisfy the above ranges, it facilitates ensuring that C satisfies its value range.

In some embodiments of the present disclosure, the strengthened glass ceramic has a CS_50 ≥ 100 MPa, preferably, 100 MPa ≤ CS_50 ≤ 250 MPa. The range of CS_50 of this strengthened glass ceramic is within the above range, indicating that the compressive stress at a depth of 50 µm from the surface of the strengthened glass ceramic is high, showing that this strengthened glass ceramic has a relatively high surface stress level.

In some embodiments of the present disclosure, the strengthened glass ceramic has a Vickers hardness greater than or equal to 790 kgf/mm², preferably 790 kgf/mm² to 1000 kgf/mm². The Vickers hardness of this strengthened glass ceramic is within the above range, indicating that the strengthened glass ceramic has high hardness, thereby ensuring its excellent mechanical properties.

In some embodiments of the present disclosure, the strengthened glass ceramic has a fracture toughness greater than or equal to 1.00 MPa·m^{1/2}, preferably greater than or equal to 1.20 MPa·m^{1/2}, more preferably greater than or equal to 1.55 MPa·m^{1/2}, for example, it may preferably be 1.55 MPa·m^{1/2} to 2.00 MPa·m^{1/2}. The fracture toughness of this strengthened glass ceramic is within the above range, indicating that the strengthened glass ceramic has high fracture toughness, thereby ensuring its excellent mechanical properties.

In some embodiments of the present disclosure, the strengthened glass ceramic has a |CT_CV| ≥ 80 MPa, preferably, 80 MPa ≤ |CT_CV| ≤ 150 MPa. The |CT_CV| of this strengthened glass ceramic is within the above range, indicating that the strengthened glass ceramic has a relatively high tensile stress level, thereby reflecting that it has a relatively high surface stress level, thus ensuring its excellent damage resistance performance.

In some embodiments of the present disclosure, in an X-ray diffraction pattern of the strengthened glass ceramic, a peak with a maximum peak intensity among characteristic peaks within a 2θ angle range of 28° to 32° is a first characteristic peak, and a peak with a maximum peak intensity among characteristic peaks within a 2θ angle range of 36° to 38° is a second characteristic peak, a peak intensity ratio X of the first characteristic peak to the second characteristic peak is 0.80 to 1.50, preferably the peak intensity ratio X is 0.85 to 1.30. In the XRD diffraction pattern, the peak intensity of a characteristic peak can reflect the integrity of crystals in the glass ceramic. By making the peak intensity ratio of the above two characteristic peaks within this range in the present disclosure, it helps to obtain an appropriate crystal integrity, thereby helping to achieve better optical effects and strengthening effects.

In some embodiments of the present disclosure, in the X-ray diffraction pattern of the strengthened glass ceramic, a characteristic peak of [400] crystal plane of the (Zn, Mg)Al₂O₄ crystalline phase is located within a 2θ angle range of 44° to 46°, a characteristic peak of [311] crystal plane of the (Zn, Mg)Al₂O₄ crystalline phase is located within a 2θ angle range of 34° to 38°, and a characteristic peak of [440] crystal plane of the (Zn, Mg)Al₂O₄ crystalline phase is located within a 2θ angle range of 64° to 67°;
a full width at half maximum W_{[400]} of the characteristic peak of [400] crystal plane is 0.650° to 1.800°, preferably W_{[400]} is 0.900° to 1.600°;
a full width at half maximum W_{[311]} of the characteristic peak of [311] crystal plane is 0.900° to 2.800°, preferably W_{[311]} is 1.100° to 2.230°; and
a full width at half maximum W_{[440]} of the characteristic peak of [440] crystal plane is 0.750° to 2.000°, preferably W_{[440]} is 0.900° to 1.600°. In the present disclosure, the full width at half maximum of the characteristic peaks of [400] crystal plane, [311] crystal plane, and [440] crystal plane can reflect the crystal size of the (Zn, Mg)Al₂O₄ crystals in the glass ceramic. By satisfying the above ranges, it facilitates ensuring that the glass ceramic for chemical strengthening has a specific crystal size and crystalline phase structure, thereby helping to ensure that the strengthened glass ceramic obtains the desired optical performance and stress level.

In some embodiments of the present disclosure, the composition at the center of the strengthened glass ceramic further comprises: K₂O 0.00 mol% to 5.00 mol%, CaO 0.00 mol% to 10.00 mol%, B₂O₃ 0.00 mol% to 10.00 mol%, and BaO 0.00 mol% to 5.00 mol%, based on the mole percentage of oxides. In the glass system of the present disclosure, K₂O, CaO, B₂O₃, or BaO are optional components. By employing appropriate amounts of these components, it can have certain improvement effects on the forming effect, crystallization effect, chemical strengthening effect, or optical effect of the glass ceramic.

In some embodiments of the present disclosure, the composition at the center of the strengthened glass ceramic comprises: SiO₂ 35.00 mol% to 60.00 mol%, Al₂O₃ 20.00 mol% to 40.00 mol%, ZrO₂ 2.00 mol% to 8.00 mol%, MgO 4.00 mol% to 7.00 mol%, ZnO 9.00 mol% to 12.00 mol%, Na₂O 2.00 mol% to 10.00 mol%, and Li₂O 3.00 mol% to 10.00 mol%, based on the mole percentage of oxides. By appropriately adjusting the contents of MgO, ZnO, Li₂O, or Na₂O, it helps to ensure that the content of the main crystalline phase in the glass ceramic for chemical strengthening meets the desired level, while also helping to ensure that the glass ceramic for chemical strengthening achieves the desired chemical strengthening effect, this is done so as to obtain a strengthened glass ceramic with a high stress level.

In some embodiments of the present disclosure, the composition at the center of the strengthened glass ceramic comprises: SiO₂ 35.00 mol% to 50.00 mol%, Al₂O₃ 25.00 mol% to 35.00 mol%, ZrO₂ 3.00 mol% to 5.00 mol%, MgO 4.00 mol% to 7.00 mol%, ZnO 9.00 mol% to 12.00 mol%, Na₂O 2.00 mol% to 10.00 mol%, and Li₂O 3.00 mol% to 10.00 mol%, based on the mole percentage of oxides. By appropriately adjusting the content of each essential oxide, it helps to ensure that the glass ceramic for chemical strengthening achieves the desired crystalline phase structure and glass network structure that can achieve a high stress level, thereby facilitating obtaining a strengthened glass ceramic with a high stress level.

In some embodiments of the present disclosure, the composition at the center of the strengthened glass ceramic satisfies:
1.30 ≤ ZnO/MgO ≤ 2.50; and/or,
0.05 ≤ Li₂O/(Al₂O₃-(MgO+ZnO)+SiO₂) ≤ 0.20; and/or,
0.19 ≤ (Al₂O₃-(MgO+ZnO))/SiO₂ ≤ 0.60; and/or,
0.26 ≤ Na₂O/Li₂O ≤ 3.00,
based on the mole percentage of each oxide in the composition of the strengthened glass ceramic.

In some embodiments of the present disclosure, the composition at the center of the strengthened glass ceramic further satisfies:
12.00 mol% ≤ ZnO+MgO ≤ 20.00 mol%, preferably, 13.00 mol% ≤ ZnO+MgO ≤ 17.30 mol%; and/or,
9.00 mol% ≤ Al₂O₃-(MgO+ZnO) ≤ 22.00 mol%, preferably, 10.00 mol% ≤ Al₂O₃-(MgO+ZnO) ≤ 20.00 mol%; and/or,
5.00 mol% ≤ Na₂O+Li₂O ≤ 15.00 mol%, preferably, 6.00 mol% ≤ Na₂O+Li₂O ≤ 13.50 mol%,
based on the mole percentage of each oxide in the composition of the strengthened glass ceramic.

In some embodiments of the present disclosure, a transmittance of the strengthened glass ceramic with a thickness of 0.7 mm at a wavelength of 550 nm is greater than or equal to 85.00%. The transmittance of the strengthened glass ceramic with a thickness of 0.7 mm at a wavelength of 550 nm being within the above range indicates that the strengthened glass ceramic of the present disclosure has high light transmittance. Simultaneously, the strengthened glass ceramic of the present disclosure also has a high mechanical strength, especially excellent drop impact resistance performance, effectively broadening the application scenarios and fields of the strengthened glass ceramic of the present disclosure.

In some embodiments of the present disclosure, for the strengthened glass ceramic with a thickness of 0.7 mm, using 80-mesh sandpaper for drop resistance testing, an average sandpaper drop resistance height of the strengthened glass ceramic is greater than or equal to 1.00 m, preferably the average sandpaper drop resistance height is greater than or equal to 1.40 m, more preferably 1.50 m to 2.50 m. The average sandpaper drop resistance height H of the strengthened glass ceramic with a thickness of 0.7 mm being within the above range indicates that the strengthened glass ceramic of the present disclosure has excellent drop impact resistance performance.

In some embodiments of the present disclosure, the strengthened glass ceramic is obtained by performing chemical strengthening treatment on a glass ceramic for chemical strengthening, and a composition of the glass ceramic for chemical strengthening is the same as the composition at the center of the strengthened glass ceramic.

A second aspect provides a glass device prepared from the strengthened glass ceramic according to any of the preceding embodiments.

A third aspect provides an electronic device, comprising the strengthened glass ceramic according to any of the preceding embodiments.

In some embodiments of the present disclosure, the electronic device comprises at least one selected from the group consisting of a mobile phone, a tablet computer, a smart wearable, a display, and a television.

One or more technical solutions of the present disclosure have the following advantages or beneficial effects:
The present disclosure provides a strengthened glass ceramic with a high strength and the use thereof. The strengthened glass ceramic of the present disclosure has the (Zn, Mg)Al₂O₄ crystalline phase (the solid solution of zinc spinel and magnesium spinel) with high hardness and high modulus as the main crystalline phase, endowing the strengthened glass ceramic with high intrinsic or inherent strength. Simultaneously, the ultra-high depth of the compressive stress layer and the relatively large deep-layer stress possessed by the strengthened glass ceramic of the present disclosure endow the strengthened glass ceramic with a specific stress structure. Through the synergistic effect of the specific crystalline phase structure and the specific stress structure, the strengthened glass ceramic of the present disclosure possesses an ultra-high mechanical strength and high damage resistance performance, especially imparting excellent drop impact resistance performance to the strengthened glass ceramic.

### BRIEF DESCRIPTION OF THE DRAWINGS

The drawings described herein are intended to provide a further understanding of the present disclosure, constitute a part of the present disclosure, and serve to explain the present disclosure together with the illustrative embodiments and their descriptions of the present disclosure, but do not constitute an undue limitation of the present disclosure.
FIG. 1 is a schematic structural diagram of a strengthened glass ceramic according to some embodiments of the present disclosure, wherein t is the thickness of the glass, d is the depth of the compressive stress layer, 11 is the compressive stress layer, and 12 is the tensile stress layer;
FIG. 2 is a comparison diagram of XRD diffraction patterns of the glass ceramics for chemical strengthening in Examples 1 to 2 and Comparative Examples 6 to 9;
FIG. 3 is the XRD diffraction pattern of the glass ceramic for chemical strengthening in Comparative Example 8;
FIG. 4 is the XRD diffraction pattern of the glass ceramic for chemical strengthening in Example 2;
FIG. 5 is the XRD diffraction pattern of the glass ceramic for chemical strengthening in Comparative Example 10;
FIG. 6 is the XRD diffraction pattern of the glass ceramic for chemical strengthening in Comparative Example 11;
FIG. 7 is the transmittance curve of the glass ceramic for chemical strengthening in Example 1 under different wavelength conditions;
FIG. 8 is a comparison diagram of XRD diffraction patterns of the glass ceramic for chemical strengthening in Example 1 before and after chemical strengthening; and
FIG. 9 is a comparison diagram of transmittance curves of the glass ceramic for chemical strengthening in Example 1 before and after chemical strengthening under different wavelength conditions.

### DETAILED DESCRIPTION

To make the purpose, technical solutions, and advantages of the present disclosure clearer, the present disclosure will be further described in detail below with reference to the accompanying drawings and examples. Obviously, the described embodiments are only a part of the embodiments of the present disclosure, not all of them. All other embodiments obtained by those skilled in the art based on the embodiments of the present disclosure shall fall within the protection scope of the present disclosure.

### Terms and Definitions

DOL_0: A depth of the compressive stress layer, refers to a distance along the thickness direction from any surface of the strengthened glass ceramic to a position close to that surface where the compressive stress is zero.

|CT_AV|: Refers to an absolute value of the average tensile stress in the tensile stress layer, and specifically refers to the absolute value of the average of all tensile stresses in the tensile stress layer.

Composition at a center of the strengthened glass ceramic: Refers to a composition at a depth center of the strengthened glass ceramic or near the depth center of the strengthened glass ceramic, that is, the composition of the region in the strengthened glass ceramic where ion exchange has not been performed. It should be understood that the composition at the center of the strengthened glass ceramic is the same or substantially the same as the composition of the glass ceramic used to prepare the strengthened glass ceramic but has not undergone chemical strengthening treatment (that is, has not undergone ion exchange).

CS_50: Refers to a compressive stress value at a depth of 50 µm from the surface of the strengthened glass ceramic along the thickness direction.

|CT_CV|: Refers to an absolute value of a maximum tensile stress in the tensile stress layer, and specifically refers to the absolute value of the maximum value among all tensile stresses in the tensile stress layer.

Base glass: Also known as basic glass, refers to the glass that has not been subjected to nucleation treatment, crystallization treatment, and strengthening treatment.

Crystal phase content: The percentage content of the mass of the crystalline phase in the glass ceramic to the total mass of the glass ceramic.

Peak intensity: Refers to the height of the diffraction peak in the XRD pattern.

Full width at half maximum: Refers to a width at half the height of the diffraction peak in the XRD pattern, usually expressed in angle or 2θ value.

In the present disclosure, the glass ceramic for chemical strengthening refers to the glass ceramic material that can be used for chemical strengthening treatment to prepare the strengthened glass ceramic.

Glass ceramic: Also known as microcrystalline glass or crystallized glass, is a type of solid composite material that simultaneously comprises a glass phase and a microcrystalline phase (also known as crystalline phase, crystallized phase, crystal phase).

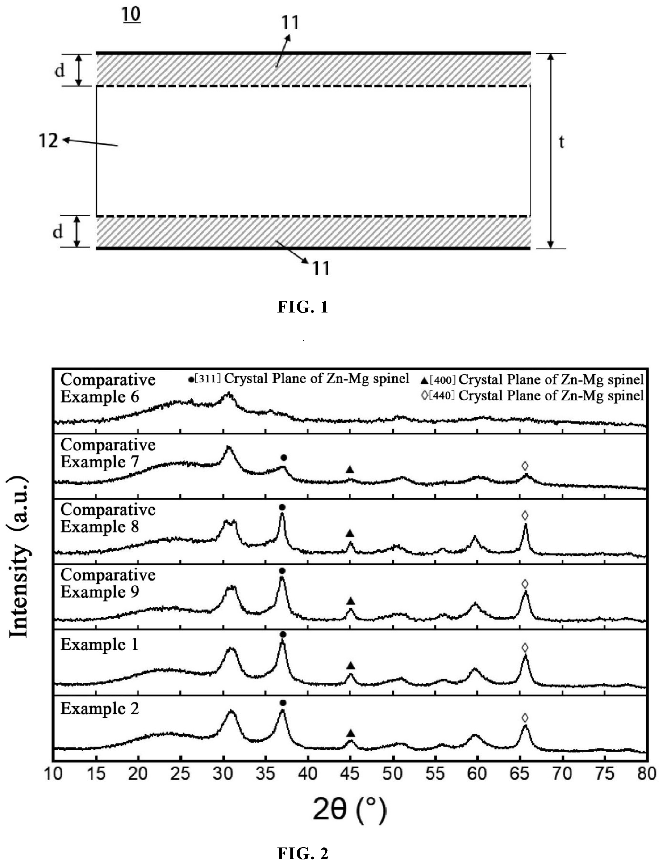

Theoretically, when the depths of the compressive stress layer extending inward from the two main surfaces of a glass product are equal or approximately equal, and the sum of the two depths of the compressive stress layer equals the thickness of the tensile stress layer, that is, as shown in FIG. 1, the depth d of the compressive stress layers 11 on both sides is approximately equal to 25% of the thickness t of the glass 10 respectively, and the thickness of the tensile stress layer 12 is approximately equal to 50% of the thickness t of the glass 10, the glass will achieve the ideal state depth of the compressive stress layer. But in fact, in the prior art, almost no glass products have achieved this target effect. On one hand, this depth of the compressive stress layer is relatively difficult to achieve, and on the other hand, in existing glass products, a higher depth of the compressive stress layer is often accompanied by a decrease in surface stress level and a reduction in the overall strength of the glass product. Because during the ion exchange process of chemical strengthening treatment, ion diffusion becomes more difficult further inwards. Simply increasing the amount of alkali metal ions to increase diffusion often leads to problems such as bursting or breakage due to excessive internal stress before reaching a greater depth. Additionally, for many glass products, after the exchanged ion diffusion reaches a given depth and the stress reaches a given level, stress relaxation occurs. The depth may increase slightly or not at all, but the stress will decrease significantly, causing the strength of the glass product to decrease. Therefore, currently, we can only make the depth of the compressive stress layer of the glass product as close as possible to this ideal effect.

In view of this, a strengthened glass ceramic with an ultra-high depth of the compressive stress layer and relatively large deep-layer stress and the use thereof are provided. Through the synergistic effect of a specific crystalline phase structure and a specific stress structure, the strengthened glass ceramic of the present disclosure possesses an ultra-high mechanical strength and high damage resistance performance, especially imparting excellent drop impact resistance performance to the strengthened glass ceramic.

In some embodiments of the present disclosure, a strengthened glass ceramic is provided. The strengthened glass ceramic comprises a main crystalline phase of a (Zn, Mg)Al₂O₄ crystalline phase and a secondary crystalline phase of a tetragonal ZrO₂ crystalline phase. The strengthened glass ceramic comprises a compressive stress layer region extending from a surface of the strengthened glass ceramic to a compression depth, and has a tensile stress layer region internally in the strengthened glass ceramic. The strengthened glass ceramic has a depth of the compressive stress layer DOL_0 ≥ 0.21t, preferably, 0.21t ≤ DOL_0 ≤ 0.25t, wherein t is a thickness of the strengthened glass ceramic. In some embodiments of the present disclosure, in this strengthened glass ceramic, DOL_0 can be 0.21t to 0.24t, 0.22t to 0.24t, 0.23t to 0.24t, or 0.21t to 0.23t. In some embodiments of the present disclosure, DOL_0 can be 0.21t, 0.22t, 0.23t, 0.24t, or 0.25t, or a numerical value within a numerical range formed with any two of the above values as endpoints, as long as the strengthened glass ceramic with the performance required by the present disclosure can be obtained. In some embodiments of the present disclosure, when the thickness t of the strengthened glass ceramic is 0.7 mm, 147 µm ≤ DOL_0 ≤ 175 µm, specifically, DOL_0 can be 147 µm, 154 µm, 161 µm, 168 µm, or 175 µm, or a numerical value within a numerical range formed with any two of the above values as endpoints, as long as the strengthened glass ceramic with the performance required by the present disclosure can be obtained. The strengthened glass ceramic has a |CT_AV| ≥ 70 MPa, preferably, 70 MPa ≤ |CT_AV| ≤ 110 MPa. In some embodiments of the present disclosure, in this strengthened glass ceramic, |CT_AV| can be 73 MPa to 108 MPa, 75 MPa to 105 MPa, 78 MPa to 100 MPa, 80 MPa to 98 MPa, or 83 MPa to 95 MPa. In some embodiments of the present disclosure, |CT_AV| can be 70 MPa, 73 MPa, 75 MPa, 78 MPa, 80 MPa, 83 MPa, 85 MPa, 88 MPa, 90 MPa, 93 MPa, 95 MPa, 98 MPa, 100 MPa, 103 MPa, 105 MPa, 108 MPa, or 110 MPa, or a numerical value within a numerical range formed with any two of the above values as endpoints, as long as the strengthened glass ceramic with the performance required by the present disclosure can be obtained. By making the strengthened glass ceramic with the main crystalline phase being the spinel (Zn, Mg)Al₂O₄ crystalline phase possess an ultra-high depth of the compressive stress layer and a relatively large tensile stress level, high mechanical strength can be imparted to the strengthened glass ceramic, which is beneficial for greatly improving the damage resistance performance of the strengthened glass ceramic, especially improving the drop impact resistance performance of the strengthened glass ceramic.

The present disclosure does not particularly limit the thickness t of the strengthened glass ceramic, as long as the purpose of the present disclosure can be achieved. For example, the thickness t of this strengthened glass ceramic satisfies: 0.2 mm ≤ t ≤ 5 mm, preferably 0.2 mm ≤ t ≤ 2 mm.

In some embodiments of the present disclosure, the glass ceramic for chemical strengthening or the strengthened glass ceramic is 2D, 2.5D, 3D, or irregularly shaped, that is, the glass ceramic for chemical strengthening can be a 2D, 2.5D, 3D, or irregularly shaped product, and the strengthened glass ceramic can also be a 2D, 2.5D, 3D, or irregularly shaped product; and/or, the glass ceramic for chemical strengthening or the strengthened glass ceramic is of uniform thickness or non-uniform thickness. Those skilled in the art can choose according to requirements. Here, "non-uniform thickness" means that the glass ceramic for chemical strengthening or the strengthened glass ceramic comprises at least two parts with different thicknesses.

In some embodiments of the present disclosure, the total crystalline phase content W of the (Zn, Mg)Al₂O₄ crystalline phase and the tetragonal ZrO₂ crystalline phase is 25.00 wt% to 70.00 wt%, preferably 30.00 wt% to 50.00 wt%, based on the mass of the strengthened glass ceramic, wherein the ratio of the (Zn, Mg)Al₂O₄ crystalline phase to the tetragonal ZrO₂ crystalline phase (referring to the mass ratio Z of the (Zn, Mg)Al₂O₄ crystalline phase to the tetragonal ZrO₂ crystalline phase) is 1.00 to 18.00, preferably 1.00 to 15.00. In some embodiments of the present disclosure, in the above strengthened glass ceramic, the average crystal size of the (Zn, Mg)Al₂O₄ crystalline phase is 3.0 nm to 10.0 nm, preferably 4.0 nm to 7.5 nm, more preferably 4.5 nm to 7.5 nm. In some embodiments of the present disclosure, the strengthened glass ceramic is transparent within the visible light range. In the present disclosure, the wavelength range of visible light is 360 nm to 740 nm, "transparent within the visible light range" means that the average transmittance to visible light is greater than 80%.

For spinel glass ceramics comprising the main crystalline phase of the (Zn, Mg)Al₂O₄ crystalline phase and the secondary crystalline phase of the tetragonal ZrO₂ crystalline phase, simply increasing the number and types of metal ions that can undergo ion exchange cannot ensure the achievement of an ultra-high depth of the compressive stress layer and deep-layer stress. On one hand, when the internal Li⁺ and Na⁺ content in the glass ceramic exceeds a given amount, it is prone to the problem of being unable to obtain a transparent glass ceramic; on the other hand, the stress distribution after chemical strengthening of the glass ceramic is jointly affected by the composition and crystalline phase structure of the glass ceramic. Simply increasing the number and types of alkali metal ions that can undergo ion exchange will not only cause changes in the composition of the glass ceramic, but also cannot guarantee that the glass ceramic obtains a crystalline phase structure that can achieve the desired stress distribution.

Not limited by theory, the composition and crystalline phase structure of the glass ceramic have a very close relationship with its stress distribution or stress structure after chemical strengthening. By making the glass ceramic satisfy the above specific composition and crystalline phase structure, it can ensure that the glass ceramic obtains an ultra-high depth of the compressive stress layer and relatively large deep-layer stress after chemical strengthening.

In some embodiments of the present disclosure, based on the mass of the strengthened glass ceramic, the total crystalline phase content W of the (Zn, Mg)Al₂O₄ crystalline phase and the tetragonal ZrO₂ crystalline phase can be 25.00 wt%, 28.00 wt%, 30.00 wt%, 33.00 wt%, 35.00 wt%, 38.00 wt%, 40.00 wt%, 43.00 wt%, 45.00 wt%, 48.00 wt%, 50.00 wt%, 53.00 wt%, 55.00 wt%, 58.00 wt%, 60.00 wt%, 63.00 wt%, 65.00 wt%, 68.00 wt%, or 70.00 wt%, or a numerical value within a numerical range formed with any two of the above values as endpoints, as long as the strengthened glass ceramic with the performance required by the present disclosure can be obtained. In some embodiments of the present disclosure, based on the mass of the strengthened glass ceramic, the total crystalline phase content W of the (Zn, Mg)Al₂O₄ crystalline phase and the tetragonal ZrO₂ crystalline phase can be 25.00 wt% to 68.00 wt%, 28.00 wt% to 65.00 wt%, 32.00 wt% to 60.00 wt%, 35.00 wt% to 55.00 wt%, or 40.00 wt% to 50.00 wt%. It should be understood that in specific embodiments, any of the above ranges can be combined with any other range, as long as the strengthened glass ceramic with the performance required by the present disclosure can be obtained.

In some embodiments of the present disclosure, in the above strengthened glass ceramic, the ratio of the (Zn, Mg)Al₂O₄ crystalline phase to the tetragonal ZrO₂ crystalline phase (mass ratio Z) can be 1.00, 2.00, 3.00, 4.00, 5.00, 6.00, 7.00, 8.00, 9.00, 10.00, 11.00, 12.00, 13.00, 14.00, 15.00, 16.00, 17.00, or 18.00, or a numerical value within a numerical range formed with any two of the above values as endpoints, as long as the strengthened glass ceramic with the performance required by the present disclosure can be obtained. In some embodiments of the present disclosure, in the above strengthened glass ceramic, the ratio of the (Zn, Mg)Al₂O₄ crystalline phase to the tetragonal ZrO₂ crystalline phase (mass ratio Z) can be 2.00 to 17.00, 4.00 to 15.00, 6.00 to 12.00, or 8.00 to 10.00. It should be understood that in specific embodiments, any of the above ranges can be combined with any other range, as long as the strengthened glass ceramic with the performance required by the present disclosure can be obtained.

In some embodiments of the present disclosure, in the above strengthened glass ceramic, the average crystal size of the (Zn, Mg)Al₂O₄ crystalline phase can be 3.0 nm, 4.0 nm, 4.2 nm, 4.5 nm, 4.8 nm, 5.0 nm, 5.2 nm, 5.5 nm, 5.8 nm, 6.0 nm, 6.2 nm, 6.5 nm, 6.8 nm, 7.0 nm, 7.2 nm, 7.5 nm, 8.0 nm, 9.0 nm, or 10.0 nm, or a numerical value within a numerical range formed with any two of the above values as endpoints, as long as the strengthened glass ceramic with the performance required by the present disclosure can be obtained. In some embodiments of the present disclosure, in the above strengthened glass ceramic, the average crystal size of the (Zn, Mg)Al₂O₄ crystalline phase can be 4.0 nm to 9.0 nm, 4.0 nm to 7.5 nm, 4.5 nm to 7.5 nm, 5.0 nm to 8.0 nm, or 6.0 nm to 7.0 nm. It should be understood that in specific embodiments, any of the above ranges can be combined with any other range, as long as the strengthened glass ceramic with the performance required by the present disclosure can be obtained.

In some embodiments of the present disclosure, the strengthened glass ceramic comprises 15.00 wt% to 45.00 wt% of the (Zn, Mg)Al₂O₄ crystalline phase based on the mass of the strengthened glass ceramic. The (Zn, Mg)Al₂O₄ crystal is a crystal with high hardness and high modulus. By precipitating an appropriate amount of the (Zn, Mg)Al₂O₄ in the glass ceramic, high intrinsic or inherent strength can be imparted to the glass ceramic. Simultaneously, by controlling the content of the (Zn, Mg)Al₂O₄ crystalline phase, the glass ceramic meets a specific crystalline phase structure, which facilitates ensuring that the glass ceramic obtains an ideal stress structure through chemical strengthening. In some embodiments of the present disclosure, the crystalline phase content W_{[(Zn, Mg)Al2O4]} of the (Zn, Mg)Al₂O₄ crystalline phase in the above strengthened glass ceramic can be 15.00 wt%, 18.00 wt%, 20.00 wt%, 23.00 wt%, 25.00 wt%, 28.00 wt%, 30.00 wt%, 33.00 wt%, 35.00 wt%, 38.00 wt%, 40.00 wt%, 43.00 wt%, or 45.00 wt%, or a numerical value within a numerical range formed with any two of the above values as endpoints, as long as the strengthened glass ceramic with the performance required by the present disclosure can be obtained. In some embodiments of the present disclosure, the crystalline phase content W_{[(Zn, Mg)Al2O4]} of the (Zn, Mg)Al₂O₄ crystalline phase in the above strengthened glass ceramic can be 18.00 wt% to 44.00 wt%, 20.00 wt% to 42.00 wt%, 24.00 wt% to 40.00 wt%, 28.00 wt% to 38.00 wt%, or 30.00 wt% to 35.00 wt%.

In some embodiments of the present disclosure, based on the mass of the strengthened glass ceramic, the crystalline phase content W_{[ZrO2]} of the tetragonal ZrO₂ crystalline phase is 2.00 wt% to 16.00 wt%. The tetragonal ZrO₂ crystalline phase together with the (Zn, Mg)Al₂O₄ crystalline phase determines the internal crystalline phase structure of the glass ceramic. By satisfying a specific content range, it helps to ensure the structural strength of the glass ceramic and to ensure that the glass ceramic obtains an ideal stress structure after chemical strengthening. In some embodiments of the present disclosure, the crystalline phase content W_{[ZrO2]} of the tetragonal ZrO₂ crystalline phase in the strengthened glass ceramic can be 2.00 wt%, 3.00 wt%, 4.00 wt%, 5.00 wt%, 6.00 wt%, 7.00 wt%, 8.00 wt%, 9.00 wt%, 10.00 wt%, 11.00 wt%, 12.00 wt%, 13.00 wt%, 14.00 wt%, 15.00 wt%, or 16.00 wt%, or a numerical value within a numerical range formed with any two of the above values as endpoints, as long as the strengthened glass ceramic with the performance required by the present disclosure can be obtained.

In some embodiments of the present disclosure, the composition at the center of the strengthened glass ceramic comprises: SiO₂ 35.00 mol% to 60.00 mol%, Al₂O₃ 20.00 mol% to 40.00 mol%, ZrO₂ 2.00 mol% to 8.00 mol%, MgO 3.00 mol% to 7.50 mol%, ZnO 7.00 mol% to 13.00 mol%, Na₂O 1.00 mol% to 10.00 mol%, and Li₂O 2.50 mol% to 10.00 mol%, based on the mole percentage of oxides. By employing this glass formulation scheme, it facilitates ensuring the preparation of the glass ceramic for chemical strengthening that satisfies a high intrinsic strength and has spinel as the main crystalline phase, this is done so as to help to obtain a strengthened glass ceramic that satisfies the desired stress structure.

It should be understood that after chemical strengthening and the ion exchange process, a composition at the surface of the glass ceramic product may differ from the composition of the glass ceramic before it underwent the ion exchange process. This is because during ion exchange, one type of alkali metal ion (for example Li⁺ or Na⁺) at the surface of the just-formed glass ceramic (for example, the glass ceramic for chemical strengthening in the present disclosure) is replaced by a larger alkali metal ion (for example Na⁺ or K⁺) respectively. However, in an embodiment, the glass composition and phase assemblage at the depth center of or near the depth center of the glass ceramic product will still be the same as the composition of the just-formed glass ceramic. That is to say, in the present disclosure, the composition and phase assemblage at the center of the strengthened glass ceramic are the same or substantially the same as those of the just-formed glass ceramic (for example, the glass ceramic for chemical strengthening in the present disclosure).

Simultaneously, the glass ceramic for chemical strengthening in the present disclosure is obtained by subjecting the base glass to heat treatment. Therefore, based on the mole percentage of oxides, the composition of the glass ceramic for chemical strengthening is the same as that of the base glass. That is, in the present disclosure, a composition of the base glass used to prepare the glass ceramic for chemical strengthening or the composition of the glass ceramic for chemical strengthening, both comprise: SiO₂ 35.00 mol% to 60.00 mol%, Al₂O₃ 20.00 mol% to 40.00 mol%, ZrO₂ 2.00 mol% to 8.00 mol%, MgO 3.00 mol% to 7.50 mol%, ZnO 7.00 mol% to 13.00 mol%, Na₂O 1.00 mol% to 10.00 mol%, and Li₂O 2.50 mol% to 10.00 mol%, based on the mole percentage of oxides. Using a base glass satisfying the above ranges to undergo heat treatment to prepare a glass ceramic for chemical strengthening that satisfies a specific crystalline phase structure, the glass ceramic for chemical strengthening can obtain a strengthened glass ceramic with an ultra-high depth of the compressive stress layer and relatively large deep-layer stress through chemical strengthening.

In the present disclosure, SiO₂ is a network-forming oxide of the glass network, an indispensable component for constituting the glass network structure. An appropriate amount of SiO₂ can increase the stability and mechanical strength of the glass, while also taking into account the formability of the glass. In the present disclosure, based on mol% of oxides, in the composition of the base glass or in the composition of the glass ceramic for chemical strengthening or in the composition at the center of the strengthened glass ceramic, a content of SiO₂ is 35.00 mol% to 60.00 mol%. In some embodiments of the present disclosure, the content of SiO₂ can be 35.00 mol%, 37.00 mol%, 40.00 mol%, 42.00 mol%, 45.00 mol%, 47.00 mol%, 50.00 mol%, 52.00 mol%, 55.00 mol%, 57.00 mol%, or 60.00 mol%, or a numerical value within a numerical range formed with any two of the above values as endpoints, as long as the strengthened glass ceramic with the performance required by the present disclosure can be obtained. In some embodiments of the present disclosure, the content of SiO₂ can be 36.00 mol% to 58.00 mol%, 38.00 mol% to 55.00 mol%, 40.00 mol% to 52.00 mol%, 42.00 mol% to 50.00 mol%, or 44.00 mol% to 48.00 mol%. It should be understood that in specific embodiments, any of the above ranges can be combined with any other range, as long as the strengthened glass ceramic with the performance required by the present disclosure can be obtained.

In the present disclosure, an appropriate amount of Al₂O₃ can promote the precipitation of the main crystalline phase, inhibit the precipitation of other impurity phases such as quartz, avoid the problem of glass being prone to crystallization and devitrification during normal cooling due to fast crystallization rate, while also being beneficial to increase the ion exchange rate during the strengthening process and improve the stress structure. In the present disclosure, based on mol% of oxides, in the composition of the base glass or in the composition of the glass ceramic for chemical strengthening or in the composition at the center of the strengthened glass ceramic, a content of Al₂O₃ is 20.00 mol% to 40.00 mol%. In some embodiments of the present disclosure, the content of Al₂O₃ can be 20.00 mol%, 21.00 mol%, 22.00 mol%, 23.00 mol%, 24.00 mol%, 25.00 mol%, 26.00 mol%, 27.00 mol%, 28.00 mol%, 29.00 mol%, 30.00 mol%, 31.00 mol%, 32.00 mol%, 33.00 mol%, 34.00 mol%, 35.00 mol%, 36.00 mol%, 37.00 mol%, 38.00 mol%, 39.00 mol%, or 40.00 mol%, or a numerical value within a numerical range formed with any two of the above values as endpoints, as long as the strengthened glass ceramic with the performance required by the present disclosure can be obtained. In some embodiments of the present disclosure, the content of Al₂O₃ can be 21.00 mol% to 38.00 mol%, 22.00 mol% to 36.00 mol%, 23.00 mol% to 34.00 mol%, or 25.00 mol% to 32.00 mol%. It should be understood that in specific embodiments, any of the above ranges can be combined with any other range, as long as the strengthened glass ceramic with the performance required by the present disclosure can be obtained.

In the present disclosure, ZrO₂ is an effective nucleating agent. During the heat treatment of the base glass, ZrO₂ first precipitates in the base glass in the form of crystals. The ZrO₂ crystals become crystal nuclei for the subsequent growth of the main crystalline phase crystals. An appropriate amount of ZrO₂ is beneficial for forming a spinel glass ceramic with a specific crystalline phase structure. In the present disclosure, based on mol% of oxides, in the composition of the base glass or in the composition of the glass ceramic for chemical strengthening or in the composition at the center of the strengthened glass ceramic, a content of ZrO₂ is 2.00 mol% to 8.00 mol%. In some embodiments of the present disclosure, the content of ZrO₂ can be 2.00 mol%, 2.50 mol%, 3.00 mol%, 3.50 mol%, 4.00 mol%, 4.50 mol%, 5.00 mol%, 5.50 mol%, 6.00 mol%, 6.50 mol%, 7.00 mol%, 7.50 mol%, or 8.00 mol%, or a numerical value within a numerical range formed with any two of the above values as endpoints, as long as the strengthened glass ceramic with the performance required by the present disclosure can be obtained. In some embodiments of the present disclosure, the content of ZrO₂ can be 2.50 mol% to 7.80 mol%, 3.00 mol% to 7.50 mol%, 3.50 mol% to 7.00 mol%, 4.00 mol% to 6.50 mol%, or 4.50 mol% to 6.00 mol%. It should be understood that in specific embodiments, any of the above ranges can be combined with any other range, as long as the strengthened glass ceramic with the performance required by the present disclosure can be obtained.

In the present disclosure, MgO and ZnO are necessary components for the main crystalline phase spinel. An appropriate amount of MgO and ZnO is beneficial to ensure the formation of the main crystalline phase with the desired content, while also reducing the difficulty of melting the base glass to a certain extent. However, excessive MgO and ZnO can easily lead to excessive growth of spinel crystal grains, making it difficult to obtain a glass ceramic for chemical strengthening with high transparency. In the present disclosure, in the composition of the base glass or in the composition of the glass ceramic for chemical strengthening or in the composition at the center of the strengthened glass ceramic, a content of MgO is 3.00 mol% to 7.50 mol%, and a content of ZnO is 7.00 mol% to 13.00 mol%, based on mol% of oxides.

In some embodiments of the present disclosure, the content of MgO can be 3.00 mol%, 3.50 mol%, 4.00 mol%, 4.50 mol%, 5.00 mol%, 5.50 mol%, 6.00 mol%, 6.50 mol%, 7.00 mol%, or 7.50 mol%, or a numerical value within a numerical range formed with any two of the above values as endpoints, as long as the strengthened glass ceramic with the performance required by the present disclosure can be obtained. In some embodiments of the present disclosure, the content of MgO can be 3.50 mol% to 7.00 mol%, 4.00 mol% to 6.50 mol%, or 4.50 mol% to 6.00 mol%. It should be understood that in specific embodiments, any of the above ranges can be combined with any other range, as long as the strengthened glass ceramic with the performance required by the present disclosure can be obtained.

In some embodiments of the present disclosure, the content of ZnO can be 7.00 mol%, 7.50 mol%, 8.00 mol%, 8.50 mol%, 9.00 mol%, 9.50 mol%, 10.00 mol%, 10.50 mol%, 11.00 mol%, 11.50 mol%, 12.00 mol%, 12.50 mol%, or 13.00 mol%, or a numerical value within a numerical range formed with any two of the above values as endpoints, as long as the strengthened glass ceramic with the performance required by the present disclosure can be obtained. In some embodiments of the present disclosure, the content of ZnO can be 7.50 mol% to 12.50 mol%, 8.50 mol% to 12.00 mol%, 9.50 mol% to 11.50 mol%, or 10.00 mol% to 11.00 mol%. It should be understood that in specific embodiments, any of the above ranges can be combined with any other range, as long as the strengthened glass ceramic with the performance required by the present disclosure can be obtained.

In the present disclosure, an appropriate amount of Na₂O helps the glass ceramic to obtain high surface compressive stress during chemical strengthening, which is beneficial for the glass ceramic to achieve a high surface stress level. Simultaneously, an appropriate amount of Na₂O can reduce a melting temperature of the base glass and the crystal precipitation temperature when the base glass is used to prepare the glass ceramic for chemical strengthening, and can also avoid the base glass from undergoing ceramization during the annealing process, and avoid the precipitation of undesired impurity phases when the base glass undergoes heat treatment to prepare the glass ceramic for chemical strengthening. In the present disclosure, based on mol% of oxides, in the composition of the base glass or in the composition of the glass ceramic for chemical strengthening or in the composition at the center of the strengthened glass ceramic, a content of Na₂O is 1.00 mol% to 10.00 mol%. In some embodiments of the present disclosure, the content of Na₂O can be 1.00 mol%, 1.50 mol%, 2.00 mol%, 2.50 mol%, 3.00 mol%, 3.50 mol%, 4.00 mol%, 4.50 mol%, 5.00 mol%, 5.50 mol%, 6.00 mol%, 6.50 mol%, 7.00 mol%, 7.50 mol%, 8.00 mol%, 8.50 mol%, 9.00 mol%, 9.50 mol%, or 10.00 mol%, or a numerical value within a numerical range formed with any two of the above values as endpoints, as long as the strengthened glass ceramic with the performance required by the present disclosure can be obtained. In some embodiments of the present disclosure, the content of Na₂O can be 1.50 mol% to 9.50 mol%, 2.50 mol% to 8.50 mol%, 3.50 mol% to 7.50 mol%, 4.50 mol% to 6.50 mol%, or 5.00 mol% to 6.00 mol%. It should be understood that in specific embodiments, any of the above ranges can be combined with any other range, as long as the strengthened glass ceramic with the performance required by the present disclosure can be obtained.

In the present disclosure, an appropriate amount of Li₂O helps the glass ceramic to obtain higher deep-layer compressive stress and a high depth of the compressive stress layer during chemical strengthening, which is beneficial for the glass ceramic to achieve a high deep-layer stress level. Simultaneously, an appropriate amount of Li₂O is beneficial for increasing the Young's modulus of the glass ceramic, and can also reduce the melting temperature of the base glass and the crystal precipitation temperature when the base glass is used to prepare the glass ceramic for chemical strengthening, and can also avoid the base glass from undergoing ceramization during the annealing process, and avoid the precipitation of undesired impurity phases or the problem of excessive crystal growth when the base glass undergoes heat treatment to prepare the glass ceramic for chemical strengthening. When an amount of Li₂O is too low, it can easily lead to a reduction in the deep-layer stress that the glass ceramic for chemical strengthening can obtain during chemical strengthening. In the present disclosure, based on mol% of oxides, in the composition of the base glass or in the composition of the glass ceramic for chemical strengthening or in the composition at the center of the strengthened glass ceramic, a content of Li₂O is 2.50 mol% to 10.00 mol%.

In some embodiments of the present disclosure, the content of Li₂O can be 2.50 mol%, 3.00 mol%, 3.50 mol%, 4.00 mol%, 4.50 mol%, 5.00 mol%, 5.50 mol%, 6.00 mol%, 6.50 mol%, 7.00 mol%, 7.50 mol%, 8.00 mol%, 8.50 mol%, 9.00 mol%, 9.50 mol%, or 10.00 mol%, or a numerical value within a numerical range formed with any two of the above values as endpoints, as long as the strengthened glass ceramic with the performance required by the present disclosure can be obtained. In some embodiments of the present disclosure, the content of Li₂O can be 3.00 mol% to 9.50 mol%, 4.00 mol% to 8.50 mol%, 5.00 mol% to 7.50 mol%, or 6.00 mol% to 7.00 mol%. It should be understood that in specific embodiments, any of the above ranges can be combined with any other range, as long as the strengthened glass ceramic with the performance required by the present disclosure can be obtained.

In some embodiments of the present disclosure, W_{[(Zn, Mg)Al2O4]} is the weight percentage of the (Zn, Mg)Al₂O₄ crystalline phase based on the strengthened glass ceramic, W_{[Al2O3]} is the weight percentage of Al₂O₃ based on the strengthened glass ceramic, W_{[MgO]} is the weight percentage of MgO based on the strengthened glass ceramic, and W_{[ZnO]} is the weight percentage of ZnO based on the strengthened glass ceramic; $A = \left(1-{W}_{\left[\left(Zn, Mg\right)Al2O4\right]}/2\right) \times {W}_{\left[Al2O3\right]} / 2 ,$ $B = \left(1-{W}_{\left[\left(Zn, Mg\right)Al2O4\right]}\right) \times \left({W}_{\left[MgO\right]}+{W}_{\left[ZnO\right]}\right) ,$ $C = A / B ,$ and in the strengthened glass ceramic, 1.50 ≤ C ≤ 1.85.

By optimizing the composition and structure, so that the crystalline phase content of the (Zn, Mg)Al₂O₄ crystalline phase, and the contents of Al₂O₃, MgO, and ZnO in the glass ceramic satisfy the range of the above characteristic C, it can ensure that the glass ceramic for chemical strengthening obtains the desired stress structure after chemical strengthening, thereby enabling the strengthened glass ceramic to achieve a high mechanical strength, especially excellent damage resistance performance.

In some embodiments of the present disclosure, the value of A is 10.00% to 25.00%, preferably 14.00% to 25.00%; and/or, the value of B is 7.50% to 12.50%, preferably 8.00% to 12.00%. By making the values of A and B satisfy the above ranges, it facilitates ensuring that C satisfies its value range. In some embodiments of the present disclosure, the value of A can be 10.00%, 11.00%, 12.00%, 13.00%, 14.00%, 15.00%, 16.00%, 17.00%, 18.00%, 19.00%, 20.00%, 21.00%, 22.00%, 23.00%, 24.00%, or 25.00%, or a numerical value within a numerical range formed with any two of the above values as endpoints, as long as the strengthened glass ceramic with the performance required by the present disclosure can be obtained. In some embodiments of the present disclosure, the value of B can be 7.50%, 8.00%, 8.50%, 9.00%, 9.50%, 10.00%, 10.50%, 11.00%, 11.50%, 12.00%, or 12.50%, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In some embodiments of the present disclosure, W_{[Al2O3]} is 35.00 wt% to 50.00 wt%.

In some embodiments of the present disclosure, W_{[MgO]} is 2.50 wt% to 4.00 wt%.

In some embodiments of the present disclosure, W_{[ZnO]} is 9.50 wt% to 14.50 wt%.

In some embodiments of the present disclosure, the strengthened glass ceramic has the CS_50 ≥ 100 MPa, preferably, 100 MPa ≤ CS_50 ≤ 250 MPa. The range of CS_50 of this strengthened glass ceramic being within the above range indicates that the compressive stress at a depth of 50 µm from the surface of the strengthened glass ceramic is high, thereby indicating that this strengthened glass ceramic has a relatively high surface stress level, which can effectively improve the damage resistance performance of the strengthened glass ceramic. In some embodiments of the present disclosure, the CS_50 of the strengthened glass ceramic can be 100 MPa, 110 MPa, 120 MPa, 130 MPa, 140 MPa, 150 MPa, 160 MPa, 170 MPa, 180 MPa, 190 MPa, 200 MPa, 210 MPa, 220 MPa, 230 MPa, 240 MPa, or 250 MPa, or a numerical value within a numerical range formed with any two of the above values as endpoints, as long as the strengthened glass ceramic with the performance required by the present disclosure can be obtained. In some embodiments of the present disclosure, the CS_50 of the above strengthened glass ceramic can be 110 MPa to 240 MPa, 120 MPa to 230 MPa, 130 MPa to 220 MPa, 140 MPa to 210 MPa, 150 MPa to 200 MPa, 160 MPa to 190 MPa, or 170 MPa to 180 MPa. It should be understood that in specific embodiments, any of the above ranges can be combined with any other range, as long as the strengthened glass ceramic with the performance required by the present disclosure can be obtained.

In some embodiments of the present disclosure, the strengthened glass ceramic has the Vickers hardness greater than or equal to 790 kgf/mm², preferably 790 kgf/mm² to 1000 kgf/mm². The Vickers hardness of this strengthened glass ceramic being within the above range indicates that the strengthened glass ceramic has high hardness, thereby ensuring its excellent mechanical properties, which is beneficial for obtaining glass ceramic products with excellent damage resistance performance. In some embodiments of the present disclosure, the Vickers hardness of the strengthened glass ceramic can be 790 kgf/mm², 800 kgf/mm², 810 kgf/mm², 820 kgf/mm², 830 kgf/mm², 840 kgf/mm², 850 kgf/mm², 860 kgf/mm², 870 kgf/mm², 880 kgf/mm², 890 kgf/mm², 900 kgf/mm², 910 kgf/mm², 920 kgf/mm², 930 kgf/mm², 940 kgf/mm², 950 kgf/mm², 960 kgf/mm², 970 kgf/mm², 980 kgf/mm², 990 kgf/mm², or 1000 kgf/mm², or a numerical value within a numerical range formed with any two of the above values as endpoints, as long as the strengthened glass ceramic with the performance required by the present disclosure can be obtained. In some embodiments of the present disclosure, the Vickers hardness of the above strengthened glass ceramic can be 800 kgf/mm² to 980 kgf/mm², 820 kgf/mm² to 960 kgf/mm², 840 kgf/mm² to 940 kgf/mm², 860 kgf/mm² to 920 kgf/mm², or 880 kgf/mm² to 900 kgf/mm². It should be understood that in specific embodiments, any of the above ranges can be combined with any other range, as long as the strengthened glass ceramic with the performance required by the present disclosure can be obtained.

In some embodiments of the present disclosure, the strengthened glass ceramic has the fracture toughness greater than or equal to 1.00 MPa·m^{1/2}, preferably greater than or equal to 1.20 MPa·m^{1/2}, more preferably greater than or equal to 1.55 MPa·m^{1/2}, for example, it may preferably be 1.55 MPa·m^{1/2} to 2.00 MPa·m^{1/2}. The fracture toughness of this strengthened glass ceramic being within the above range indicates that the strengthened glass ceramic has high fracture toughness, thereby ensuring its excellent mechanical properties, which is beneficial for obtaining glass ceramic products with excellent damage resistance performance. In some embodiments of the present disclosure, the fracture toughness of the strengthened glass ceramic can be 1.00 MPa·m^{1/2}, 1.20 MPa·m^{1/2}, 1.55 MPa·m^{1/2}, 1.60 MPa·m^{1/2}, 1.65 MPa·m^{1/2}, 1.70 MPa·m^{1/2}, 1.75 MPa·m^{1/2}, 1.80 MPa·m^{1/2}, 1.85 MPa·m^{1/2}, 1.90 MPa·m^{1/2}, 1.95 MPa·m^{1/2}, or 2.00 MPa·m^{1/2}, or a numerical value within a numerical range formed with any two of the above values as endpoints, as long as the strengthened glass ceramic with the performance required by the present disclosure can be obtained. In some embodiments of the present disclosure, the fracture toughness of the above strengthened glass ceramic can be 1.20 MPa·m^{1/2} to 2.00 MPa·m^{1/2}, 1.40 MPa·m^{1/2} to 1.80 MPa·m^{1/2}, or 1.50 MPa·m^{1/2} to 1.90 MPa·m^{1/2}. It should be understood that in specific embodiments, any of the above ranges can be combined with any other range, as long as the strengthened glass ceramic with the performance required by the present disclosure can be obtained.

In some embodiments of the present disclosure, the strengthened glass ceramic has the |CT_CV| ≥ 80 MPa, preferably, 80 MPa ≤ |CT_CV| ≤ 150 MPa. The |CT_CV| of this strengthened glass ceramic being within the above range indicates that the strengthened glass ceramic has a relatively high tensile stress level, thereby reflecting that it has a relatively high surface stress level, thus ensuring its excellent mechanical properties, which is beneficial for obtaining glass ceramic products with excellent damage resistance performance. In some embodiments of the present disclosure, the |CT_CV| of the strengthened glass ceramic can be 80 MPa, 85 MPa, 90 MPa, 95 MPa, 100 MPa, 105 MPa, 110 MPa, 115 MPa, 120 MPa, 125 MPa, 130 MPa, 135 MPa, 140 MPa, 145 MPa, or 150 MPa, or a numerical value within a numerical range formed with any two of the above values as endpoints, as long as the strengthened glass ceramic with the performance required by the present disclosure can be obtained. In some embodiments of the present disclosure, the |CT_CV| of the above strengthened glass ceramic can be 85 MPa to 150 MPa, 90 MPa to 145 MPa, 95 MPa to 140 MPa, 100 MPa to 135 MPa, or 110 MPa to 130 MPa. It should be understood that in specific embodiments, any of the above ranges can be combined with any other range, as long as the strengthened glass ceramic with the performance required by the present disclosure can be obtained.

The relevant characteristics of the X-ray diffraction pattern can reflect the crystalline phase structure possessed by the glass ceramic, including crystalline phase composition, crystal size, etc. By making the glass ceramic satisfy a specific crystalline phase structure, it helps to enable the glass ceramic to obtain a high intrinsic strength on one hand, and on the other hand, it helps to improve the chemical strengthening effect of the glass ceramic, enabling it to obtain an ultra-high depth of the compressive stress layer and relatively large deep-layer stress through chemical strengthening, thereby facilitating the improvement of the mechanical strength and damage resistance performance of the glass ceramic.

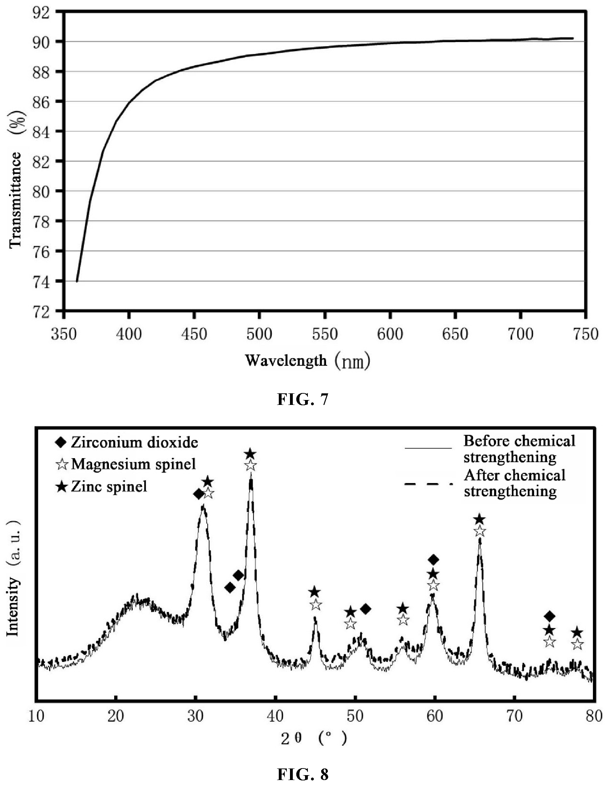

It should be understood that in the glass ceramic of the present disclosure, neither the main crystalline phase of the (Zn, Mg)Al₂O₄ crystalline phase nor the secondary crystalline phase of the tetragonal ZrO₂ crystalline phase comprises alkali metal ions, so they do not participate in the ion exchange during the chemical strengthening process. Based on this, the crystalline phase structure of the strengthened glass ceramic after chemical strengthening in the present disclosure is substantially the same as that of the glass ceramic for chemical strengthening. That is, the crystalline phase structure characteristics such as crystalline phase content, crystal composition, crystal size, and the X-ray diffraction pattern characteristics possessed by the strengthened glass ceramic obtained through the chemical strengthening process in the present disclosure are substantially the same as those of the glass ceramic for chemical strengthening. As shown in FIG. 8, in Example 1, the XRD patterns of the glass ceramic for chemical strengthening before chemical strengthening and the strengthened glass ceramic after chemical strengthening are substantially the same.

In some embodiments of the present disclosure, in the X-ray diffraction pattern of the strengthened glass ceramic, the peak with the maximum peak intensity among the characteristic peaks within the 2θ angle range of 28° to 32° is the first characteristic peak, and the peak with the maximum peak intensity among the characteristic peaks within the 2θ angle range of 36° to 38° is the second characteristic peak, the peak intensity ratio X of the first characteristic peak to the second characteristic peak is 0.80 to 1.50, preferably the peak intensity ratio X is 0.85 to 1.30. In the XRD diffraction pattern, the peak intensity of a characteristic peak can reflect the integrity of crystals in the glass ceramic. By making the peak intensity ratio of the above two characteristic peaks within this range in the present disclosure, it helps to obtain an appropriate crystal integrity, thereby helping to achieve better optical effects and strengthening effects. In some embodiments of the present disclosure, the peak intensity ratio X can be 0.80, 0.90, 1.00, 1.10, 1.20, 1.30, 1.40, or 1.50, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In some embodiments of the present disclosure, in the X-ray diffraction pattern of the strengthened glass ceramic, the characteristic peak of [400] crystal plane of the (Zn, Mg)Al₂O₄ crystalline phase is located within the 2θ angle range of 44° to 46°, the characteristic peak of [311] crystal plane of the (Zn, Mg)Al₂O₄ crystalline phase is located within the 2θ angle range of 34° to 38°, and the characteristic peak of [440] crystal plane of the (Zn, Mg)Al₂O₄ crystalline phase is located within the 2θ angle range of 64° to 67°; the full width at half maximum W_{[400]} of the characteristic peak of [400] crystal plane is 0.650° to 1.800°, preferably W_{[400]} is 0.900° to 1.600°; the full width at half maximum W_{[311]} of the characteristic peak of [311] crystal plane is 0.900° to 2.800°, preferably W_{[311]} is 1.100° to 2.230°; the full width at half maximum W_{[440]} of the characteristic peak of [440] crystal plane is 0.750° to 2.000°, preferably W_{[440]} is 0.900° to 1.600°. In the present disclosure, the full width at half maximum of the characteristic peaks of [400] crystal plane, [311] crystal plane, and [440] crystal plane can reflect the crystal size of the (Zn, Mg)Al₂O₄ crystals in the glass ceramic. By satisfying the above ranges, it facilitates ensuring that the glass ceramic for chemical strengthening or the strengthened glass ceramic has a specific crystal size and crystalline phase structure, thereby helping to ensure that the strengthened glass ceramic obtains the desired optical performance and stress level.

In some embodiments of the present disclosure, a value of W_{[400]} can be 0.650°, 0.700°, 0.800°, 0.900°, 1.000°, 1.100°, 1.200°, 1.300°, 1.400°, 1.500°, 1.600°, 1.700°, or 1.800°, or a numerical value within a numerical range formed with any two of the above values as endpoints, as long as the strengthened glass ceramic with the performance required by the present disclosure can be obtained. In some embodiments of the present disclosure, a value of W_{[311]} can be 0.900°, 1.000°, 1.100°, 1.200°, 1.300°, 1.400°, 1.500°, 1.600°, 1.700°, 1.800°, 1.900°, 2.000°, 2.100°, 2.200°, 2.230°, 2.300°, 2.400°, 2.500°, 2.600°, 2.700°, or 2.800°, or a numerical value within a numerical range formed with any two of the above values as endpoints, as long as the strengthened glass ceramic with the performance required by the present disclosure can be obtained. In some embodiments of the present disclosure, a value of W_{[440]} can be 0.750°, 0.800°, 0.900°, 1.000°, 1.100°, 1.200°, 1.300°, 1.400°, 1.500°, 1.600°, 1.700°, 1.800°, 1.900°, or 2.000°, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In some embodiments of the present disclosure, based on the mole percentage of oxides, the composition of the base glass used to prepare the glass ceramic for chemical strengthening or the composition of the glass ceramic for chemical strengthening or the composition at the center of the strengthened glass ceramic after chemical strengthening further comprises: K₂O 0.00 mol% to 5.00 mol%, CaO 0.00 mol% to 10.00 mol%, B₂O₃ 0.00 mol% to 10.00 mol%, and BaO 0.00 mol% to 5.00 mol%. In the present disclosure, K₂O, CaO, B₂O₃, or BaO are optional components. An appropriate amount of these components can have certain improvement effects on the forming effect, crystallization effect, chemical strengthening effect, or optical effect of the glass ceramic.

In the present disclosure, an appropriate amount of K₂O helps to improve the formability of the base glass and helps to reduce the crystallization tendency of the base glass during the preparation process. In the present disclosure, based on mol% of oxides, in the composition of the base glass or in the composition of the glass ceramic for chemical strengthening or in the composition at the center of the strengthened glass ceramic, a content of K₂O is 0.00 mol% to 5.00 mol%. In some embodiments of the present disclosure, K₂O can be 0.00 mol%, 0.50 mol%, 1.00 mol%, 1.50 mol%, 2.00 mol%, 2.50 mol%, 3.00 mol%, 3.50 mol%, 4.00 mol%, 4.50 mol%, or 5.00 mol%, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In the present disclosure, an appropriate amount of B₂O₃ helps to reduce the difficulty of melting the base glass, helps to promote the precipitation of the main crystalline phase spinel, and also helps to effectively avoid the occurrence of opalescence or the precipitation of impurity phases affecting the optical performance of the glass ceramic when the base glass is subjected to heat treatment to prepare the glass ceramic for chemical strengthening. In the present disclosure, based on mol% of oxides, in the composition of the base glass or in the composition of the glass ceramic for chemical strengthening or in the composition at the center of the strengthened glass ceramic, a content of B₂O₃ is 0.00 mol% to 10.00 mol%. In some embodiments of the present disclosure, B₂O₃ can be 0.00 mol%, 0.50 mol%, 1.00 mol%, 1.50 mol%, 2.00 mol%, 2.50 mol%, 3.00 mol%, 3.50 mol%, 4.00 mol%, 4.50 mol%, 5.00 mol%, 5.50 mol%, 6.00 mol%, 6.50 mol%, 7.00 mol%, 7.50 mol%, 8.00 mol%, 8.50 mol%, 9.00 mol%, 9.50 mol%, or 10.00 mol%, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In the present disclosure, an appropriate amount of BaO helps to improve the melting effect of the base glass, while also inhibiting the growth of crystal grains to a certain extent, this is done so as to have a certain improvement effect on the optical performance of the glass ceramic. In the present disclosure, based on mol% of oxides, in the composition of the base glass or in the composition of the glass ceramic for chemical strengthening or in the composition at the center of the strengthened glass ceramic, a content of BaO is 0.00 mol% to 5.00 mol%. In some embodiments of the present disclosure, BaO can be 0.00 mol%, 0.50 mol%, 1.00 mol%, 1.50 mol%, 2.00 mol%, 2.50 mol%, 3.00 mol%, 3.50 mol%, 4.00 mol%, 4.50 mol%, or 5.00 mol%, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In the present disclosure, an appropriate amount of CaO helps to reduce the viscosity of the glass melt, improve the formability, strain point, and Young's modulus of the glass, and also helps to improve the ion exchange capability of the glass ceramic. Simultaneously, an appropriate amount of CaO helps to improve the gloss and transparency of the glass, helps to reduce the crystallization tendency of the base glass, and helps to slow down the hardening speed of the glass. In the present disclosure, based on mol% of oxides, in the composition of the base glass or in the composition of the glass ceramic for chemical strengthening or in the composition at the center of the strengthened glass ceramic, a content of CaO is 0.00 mol% to 10.00 mol%. In some embodiments of the present disclosure, CaO can be 0.00 mol%, 0.50 mol%, 1.00 mol%, 1.50 mol%, 2.00 mol%, 2.50 mol%, 3.00 mol%, 3.50 mol%, 4.00 mol%, 4.50 mol%, 5.00 mol%, 5.50 mol%, 6.00 mol%, 6.50 mol%, 7.00 mol%, 7.50 mol%, 8.00 mol%, 8.50 mol%, 9.00 mol%, 9.50 mol%, or 10.00 mol%, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In some embodiments of the present disclosure, the composition of the base glass used to prepare the glass ceramic for chemical strengthening or the composition of the glass ceramic for chemical strengthening or the composition at the center of the strengthened glass ceramic comprises: SiO₂ 35.00 mol% to 60.00 mol%, Al₂O₃ 20.00 mol% to 40.00 mol%, ZrO₂ 2.00 mol% to 8.00 mol%, MgO 3.00 mol% to 7.50 mol%, ZnO 7.00 mol% to 13.00 mol%, Na₂O 1.00 mol% to 10.00 mol%, Li₂O 2.50 mol% to 10.00 mol%, K₂O 0.00 mol% to 5.00 mol%, CaO 0.00 mol% to 10.00 mol%, B₂O₃ 0.00 mol% to 10.00 mol%, and BaO 0.00 mol% to 5.00 mol%, based on the mole percentage of oxides. By employing the above glass formulation scheme, it facilitates ensuring the preparation of a glass ceramic for chemical strengthening that satisfies a high intrinsic strength and has spinel as the main crystalline phase, this is done so as to help to obtain a strengthened glass ceramic that meets the desired stress structure.

In some embodiments of the present disclosure, the composition of the base glass used to prepare the glass ceramic for chemical strengthening or the composition of the glass ceramic for chemical strengthening or the composition at the center of the strengthened glass ceramic comprises: SiO₂ 35.00 mol% to 50.00 mol%, Al₂O₃ 25.00 mol% to 35.00 mol%, ZrO₂ 3.00 mol% to 5.00 mol%, MgO 4.00 mol% to 7.00 mol%, ZnO 9.00 mol% to 12.00 mol%, Na₂O 2.00 mol% to 10.00 mol%, Li₂O 3.00 mol% to 10.00 mol%, K₂O 0.00 mol% to 5.00 mol%, CaO 0.00 mol% to 10.00 mol%, B₂O₃ 0.00 mol% to 10.00 mol%, and BaO 0.00 mol% to 5.00 mol%, based on the mole percentage of oxides. By appropriately adjusting the content of each essential oxide, it helps to ensure that the glass ceramic for chemical strengthening obtains the desired crystalline phase structure and glass network structure that can achieve a high stress level, thereby facilitating obtaining a strengthened glass ceramic with a high stress level.

In some embodiments of the present disclosure, the composition of the base glass used to prepare the glass ceramic for chemical strengthening or the composition of the glass ceramic for chemical strengthening or the composition at the center of the strengthened glass ceramic comprises: SiO₂ 35.00 mol% to 60.00 mol%, Al₂O₃ 20.00 mol% to 40.00 mol%, ZrO₂ 2.00 mol% to 8.00 mol%, MgO 4.00 mol% to 7.00 mol%, ZnO 9.00 mol% to 12.00 mol%, Na₂O 2.00 mol% to 10.00 mol%, Li₂O 3.00 mol% to 10.00 mol%, K₂O 0.00 mol% to 5.00 mol%, CaO 0.00 mol% to 10.00 mol%, B₂O3 0.00 mol% to 10.00 mol%, and BaO 0.00 mol% to 5.00 mol%, based on the mole percentage of oxides. By appropriately adjusting the contents of MgO, ZnO, Li₂O, or Na₂O, it helps to ensure that the content of the main crystalline phase in the glass ceramic for chemical strengthening meets the desired level, while also helping to ensure that the glass ceramic for chemical strengthening achieves the desired chemical strengthening effect, this is done so as to obtain a strengthened glass ceramic with a high stress level.

In some embodiments of the present disclosure, based on the mole percentage of each oxide in the composition, the composition of the base glass used to prepare the glass ceramic for chemical strengthening or the composition of the glass ceramic for chemical strengthening or the composition at the center of the strengthened glass ceramic satisfies: 1.30 ≤ ZnO/MgO ≤ 2.50; by making ZnO and MgO satisfy a specific content relationship, it helps to ensure the formation of the desired main crystalline phase structure. In some embodiments of the present disclosure, a value of ZnO/MgO can be 1.30, 1.40, 1.50, 1.60, 1.70, 1.80, 1.90, 2.00, 2.10, 2.20, 2.30, 2.40, or 2.50, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In some embodiments of the present disclosure, based on the mole percentage of each oxide in the composition, the composition of the base glass used to prepare the glass ceramic for chemical strengthening or the composition of the glass ceramic for chemical strengthening or the composition at the center of the strengthened glass ceramic satisfies: 0.05 ≤ Li₂O/(Al₂O₃-(MgO+ZnO)+SiO₂) ≤ 0.20; by making Li₂O, Al₂O₃, MgO, ZnO, and SiO₂ satisfy a specific content relationship, it helps to improve the ion exchange performance of the glass ceramic, helps the glass ceramic to obtain a high depth of the compressive stress layer and relatively large deep-layer stress through chemical strengthening, thereby helping to improve the damage resistance performance of the strengthened glass ceramic, especially improving its drop impact resistance performance. In some embodiments of the present disclosure, a value of Li₂O/(Al₂O₃-(MgO+ZnO)+SiO₂) can be 0.05, 0.06, 0.07, 0.08, 0.09, 0.10, 0.11, 0.12, 0.13, 0.14, 0.15, 0.16, 0.17, 0.18, 0.19, or 0.20, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In some embodiments of the present disclosure, based on the mole percentage of each oxide in the composition, the composition of the base glass used to prepare the glass ceramic for chemical strengthening or the composition of the glass ceramic for chemical strengthening or the composition at the center of the strengthened glass ceramic satisfies: 0.19 ≤ (Al₂O₃-(MgO+ZnO))/SiO₂ ≤ 0.60. By making Al₂O₃, MgO, ZnO, and SiO₂ satisfy a specific content relationship, it can ensure that there is an appropriate amount of Al in the residual glass phase of the glass ceramic. On one hand, it helps to exert the synergistic effect of Si and Al, enabling the residual glass phase to form a specific network structure, this is done so as to improve the intrinsic strength of the glass ceramic; on the other hand, it helps to promote ion exchange and improve the chemical strengthening effect of the glass ceramic. In some embodiments of the present disclosure, a value of (Al₂O₃-(MgO+ZnO))/SiO₂ can be 0.19, 0.20, 0.23, 0.25, 0.28, 0.30, 0.33, 0.35, 0.38, 0.40, 0.43, 0.45, 0.48, 0.50, 0.53, 0.55, 0.58, or 0.60, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In some embodiments of the present disclosure, based on the mole percentage of each oxide in the composition, the composition of the base glass used to prepare the glass ceramic for chemical strengthening or the composition of the glass ceramic for chemical strengthening or the composition at the center of the strengthened glass ceramic satisfies: 0.26 ≤ Na₂O/Li₂O ≤ 3.00. By making Na and Li satisfy a specific content relationship, it helps to ensure that the glass ceramic obtains the desired surface stress level and deep-layer stress level after chemical strengthening, this is done so as to obtain the desired stress structure, achieving a high mechanical strength and high damage resistance performance. In some embodiments of the present disclosure, a value of Na₂O/Li₂O can be 0.26, 0.30, 0.50, 0.80, 1.00, 1.20, 1.50, 1.80, 2.00, 2.20, 2.30, 2.50, 2.80, or 3.00, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In some embodiments of the present disclosure, based on the mole percentage of each oxide in the composition, the composition of the base glass used to prepare the glass ceramic for chemical strengthening or the composition of the glass ceramic for chemical strengthening or the composition at the center of the strengthened glass ceramic further satisfies: 12.00 mol% ≤ ZnO+MgO ≤ 20.00 mol%, preferably, 13.00 mol% ≤ ZnO+MgO ≤ 17.30 mol%. By ensuring that the composition has sufficient amounts of ZnO and MgO, it helps to ensure that a sufficient content of the main crystalline phase can precipitate in the glass ceramic, this is done so as to enable it to form the desired crystalline phase structure. In some embodiments of the present disclosure, a value of ZnO+MgO can be 12.00 mol%, 13.00 mol%, 13.30 mol%, 13.50 mol%, 13.80 mol%, 14.00 mol%, 14.30 mol%, 14.50 mol%, 14.80 mol%, 15.00 mol%, 15.30 mol%, 15.50 mol%, 15.80 mol%, 16.00 mol%, 16.30 mol%, 16.50 mol%, 16.80 mol%, 17.00 mol%, 17.30 mol%, 18.00 mol%, 19.00 mol%, or 20.00 mol%, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In some embodiments of the present disclosure, based on the mole percentage of each oxide in the composition, the composition of the base glass used to prepare the glass ceramic for chemical strengthening or the composition of the glass ceramic for chemical strengthening or the composition at the center of the strengthened glass ceramic further satisfies: 9.00 mol% ≤ Al₂O₃-(MgO+ZnO) ≤ 22.00 mol%, preferably, 10.00 mol% ≤ Al₂O₃-(MgO+ZnO) ≤ 20.00 mol%. By making the content of Al₂O₃ in the composition higher than the sum of the contents of MgO and ZnO, while ensuring the formation of the main crystalline phase, it can ensure that there is an appropriate amount of Al in the residual glass phase. On one hand, it helps to exert the synergistic effect of Si and Al, enabling the residual glass phase to form a specific network structure, this is done so as to improve the intrinsic strength of the glass ceramic; on the other hand, it helps to promote ion exchange and improve the chemical strengthening effect of the glass ceramic. In some embodiments of the present disclosure, a value of Al₂O₃-(MgO+ZnO) can be 9.00 mol%, 10.00 mol%, 11.00 mol%, 12.00 mol%, 13.00 mol%, 14.00 mol%, 15.00 mol%, 16.00 mol%, 17.00 mol%, 18.00 mol%, 19.00 mol%, 20.00 mol%, 21.00 mol%, or 22.00 mol%, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In some embodiments of the present disclosure, based on the mole percentage of each oxide in the composition, the composition of the base glass used to prepare the glass ceramic for chemical strengthening or the composition of the glass ceramic for chemical strengthening or the composition at the center of the strengthened glass ceramic further satisfies: 5.00 mol% ≤ Na₂O+Li₂O ≤ 15.00 mol%, preferably, 6.00 mol% ≤ Na₂O+Li₂O ≤ 13.50 mol%. By ensuring that the composition has sufficient amounts of Na and Li, it helps to improve the ion exchange performance of the glass ceramic, this is done so as to ensure that the glass ceramic obtains the desired surface stress level and deep-layer stress level after chemical strengthening, thereby obtaining the desired stress structure, achieving a high mechanical strength and high damage resistance performance. In some embodiments of the present disclosure, a value of Na₂O+Li₂O can be 5.00 mol%, 5.50 mol%, 6.00 mol%, 6.50 mol%, 7.00 mol%, 7.50 mol%, 8.00 mol%, 8.50 mol%, 9.00 mol%, 9.50 mol%, 10.00 mol%, 10.50 mol%, 11.00 mol%, 11.50 mol%, 12.00 mol%, 12.50 mol%, 13.00 mol%, 13.50 mol%, 14.00 mol%, 14.50 mol%, or 15.00 mol%, or a numerical value within a numerical range formed with any two of the above values as endpoints, as long as the strengthened glass ceramic with the performance required by the present disclosure can be obtained. It should be understood that in specific embodiments, any of the above ranges can be combined with any other range, as long as the strengthened glass ceramic with the performance required by the present disclosure can be obtained.

In the present disclosure, the substances in the above relational expressions ZnO/MgO, Li₂O/(Al₂O₃-(MgO+ZnO)+SiO₂), (Al₂O₃-(MgO+ZnO))/SiO₂, Na₂O/Li₂O,ZnO+MgO, Al₂O₃-(MgO+ZnO), Na₂O+Li₂O represent a mole percentage content of the corresponding substances. For example, ZnO represents a mole percentage content of ZnO, MgO represents a mole percentage content of MgO, etc., which will not be repeated one by one in the present disclosure.

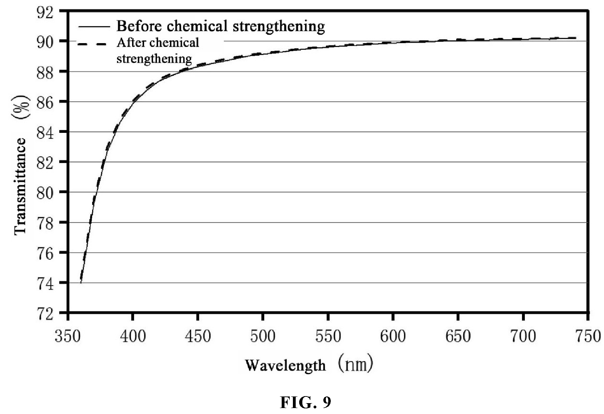

In some embodiments of the present disclosure, the transmittance T of the strengthened glass ceramic with a thickness of 0.7 mm at a wavelength of 550 nm is greater than or equal to 85.00%. The transmittance of the strengthened glass ceramic with a thickness of 0.7 mm at a wavelength of 550 nm being within the above range indicates that the strengthened glass ceramic of the present disclosure has high transparency. Simultaneously, the strengthened glass ceramic of the present disclosure also has excellent damage resistance performance, especially excellent drop impact resistance performance, effectively broadening the application scenarios and fields of the strengthened glass ceramic of the present disclosure. In some embodiments of the present disclosure, the transmittance T can be 85%, 86%, 87%, 88%, 89%, 90%, 91%, 92%, 93%, 94%, 95%, 96%, 97%, 98%, or 99%, or a numerical value within a numerical range formed with any two of the above values as endpoints, as long as the strengthened glass ceramic with the performance required by the present disclosure can be obtained. As shown in FIG. 9, in the present disclosure, before and after chemical strengthening, the transmittance of the glass ceramic for chemical strengthening is substantially the same as that of the strengthened glass ceramic. That is to say, in the present disclosure, by using a glass ceramic for chemical strengthening with high transmittance, a strengthened glass ceramic product with similarly excellent transmittance can be obtained through chemical strengthening treatment.

In some embodiments of the present disclosure, for the strengthened glass ceramic with a thickness of 0.7 mm, using 80-mesh sandpaper for drop resistance testing, the average sandpaper drop resistance height H of the strengthened glass ceramic is greater than or equal to 1.00 m, preferably the average sandpaper drop resistance height is greater than or equal to 1.40 m, more preferably 1.50 m to 2.50 m. The average sandpaper drop resistance height H of the strengthened glass ceramic with a thickness of 0.7 mm being within the above range indicates that the strengthened glass ceramic of the present disclosure has a high mechanical strength and high damage resistance performance. In some embodiments of the present disclosure, the average sandpaper drop resistance height H can be 1.50 m, 1.60 m, 1.70 m, 1.80 m, 1.90 m, 2.00 m, 2.10 m, 2.20 m, 2.30 m, 2.40 m, or 2.50 m, or a numerical value within a numerical range formed with any two of the above values as endpoints, as long as the strengthened glass ceramic with the performance required by the present disclosure can be obtained.

In some embodiments of the present disclosure, the strengthened glass ceramic is obtained by performing chemical strengthening treatment on the glass ceramic for chemical strengthening, and the composition of the glass ceramic for chemical strengthening is the same or substantially the same as the composition at the center of the strengthened glass ceramic.

The strengthened glass ceramic according to any of the preceding embodiments of the present disclosure can be prepared by a method comprising, but not limited to, the following steps:
(1) Preparing the base glass: In terms of the mole percentage of oxides, performing batching according to the composition of the base glass or the composition at the center of the strengthened glass ceramic according to any of the preceding embodiments, mixing uniformly, and then preparing using conventional methods known in the art for preparing base glass. The methods for preparing the base glass herein include, but are not limited to, float, overflow, rolling, casting, or continuous melting. The present disclosure does not limit the various parameters during the preparation process of the base glass, as long as the transparent base glass with the performance required by the present disclosure can be obtained.
(2) Preparing the glass ceramic for chemical strengthening: Subjecting the base glass obtained in step (1) to heat treatment. The heat treatment herein includes, but is not limited to, one-step heat treatment or multi-step heat treatment, to obtain the glass ceramic for chemical strengthening.
(3) Chemical strengthening treatment: Subjecting the glass ceramic for chemical strengthening obtained in step (2) to chemical strengthening treatment to obtain the strengthened glass ceramic according to any of the preceding embodiments.

In some embodiments of the present disclosure, the preparation method of the base glass in step (1) above may include, but is not limited to, the following steps: Performing batching according to the composition of the base glass or the composition at the center of the strengthened glass ceramic according to any of the preceding embodiments, mixing uniformly, then melting, forming, cooling, and annealing to obtain the base glass. The present disclosure does not particularly limit the temperature and time of melting, as long as each component can be fully melted. Preferably, the melting temperature is 1550°C to 1800°C, and the melting time is preferably 3 h to 12 h. The present disclosure does not limit the forming method, as long as the purpose of the present disclosure can be achieved. For example, it can be cast into a mold to form a glass brick. The present disclosure does not limit the cooling temperature, as long as the purpose of the present disclosure can be achieved. Preferably, the cooling temperature is 800°C to 1000°C. The present disclosure does not limit the annealing temperature and time, as long as the purpose of the present disclosure can be achieved. Preferably, the annealing temperature is 500°C to 700°C, and the time is 20 h to 26 h.

In some embodiments of the present disclosure, the heat treatment in step (2) above includes nucleation treatment and crystallization treatment. Preferably, a temperature of the nucleation treatment T₁ is 600°C to 850°C, more preferably T₁ is 650°C to 850°C. In some embodiments of the present disclosure, the temperature of the nucleation treatment T₁ can be 600°C, 625°C, 650°C, 675°C, 680°C, 690°C, 700°C, 710°C, 720°C, 725°C, 730°C, 740°C, 750°C, 775°C, 800°C, 825°C, or 850°C, or a numerical value within a numerical range formed with any two of the above values as endpoints, as long as the glass ceramic for chemical strengthening with the performance required by the present disclosure can be obtained. Preferably, a time of nucleation treatment t₁ is 0 h to 72 h, more preferably t₁ is 0 h to 24 h, even more preferably t₁ is 0 h to 8 h. In some embodiments of the present disclosure, the time of nucleation treatment t₁ can be 0 h, 1 h, 2 h, 3 h, 4 h, 5 h, 6 h, 7 h, 8 h, 16 h, 24 h, 32 h, 40 h, 48 h, 56 h, 64 h, or 72 h, or a numerical value within a numerical range formed with any two of the above values as endpoints, as long as the glass ceramic for chemical strengthening with the performance required by the present disclosure can be obtained. Preferably, a temperature of the crystallization treatment T₂ is 700°C to 1000°C. In some embodiments of the present disclosure, the temperature of the crystallization treatment T₂ can be 700°C, 710°C, 720°C, 730°C, 740°C, 750°C, 760°C, 770°C, 780°C, 790°C, 800°C, 810°C, 820°C, 830°C, 840°C, 850°C, 875°C, 900°C, 925°C, 950°C, 975°C, or 1000°C, or a numerical value within a numerical range formed with any two of the above values as endpoints, as long as the glass ceramic for chemical strengthening with the performance required by the present disclosure can be obtained. Preferably, a time of crystallization treatment t₂ is 10 min to 400 min, preferably t₂ is 10 min to 120 min. In some embodiments of the present disclosure, the time of crystallization treatment t₂ can be 10 min, 20 min, 30 min, 40 min, 50 min, 60 min, 70 min, 80 min, 90 min, 100 min, 110 min, 120 min, 150 min, 170 min, 200 min, 220 min, 250 min, 280 min, 300 min, 320 min, 350 min, 370 min, or 400 min, or a numerical value within a numerical range formed with any two of the above values as endpoints, as long as the glass ceramic for chemical strengthening with the performance required by the present disclosure can be obtained.

In the present disclosure, when subjecting the base glass to heat treatment to prepare the glass ceramic for chemical strengthening, one-step heat treatment can be performed, or two-step or multi-step heat treatment can be performed. If one-step heat treatment is performed, it means that nucleation treatment is not performed separately. One-step heating is performed directly, and nucleation and target crystal growth are carried out at the temperature reached during the one-step heating process. It can be understood as directly performing crystallization treatment. If two-step heat treatment is performed, it means that a two-step heating process is performed: nucleation treatment is performed first, followed by target crystal growth treatment, i.e., crystallization treatment. If multi-step heat treatment is performed, then a stepwise heating method is used in the nucleation treatment stage and/or the crystallization treatment stage. That is, during the entire heat treatment process, multiple (more than two) heating steps are performed.

In the present disclosure, the nucleation treatment involves heating to the specified temperature of nucleation treatment (also known as the nucleation temperature), and after reaching the nucleation treatment temperature, holding for a given time. This holding time is the time of nucleation treatment (also known as the nucleation time). The crystallization treatment involves heating to the specified temperature of crystallization treatment (also known as the crystallization temperature), and after reaching the crystallization treatment temperature, holding for a given time. This holding time is the time of crystallization treatment time (also known as the crystallization time).

In some embodiments of the present disclosure, in step (2), when performing heat treatment, the heating rate is preferably controlled to be 5 K/min to 15 K/min, preferably 5 K/min to 10 K/min. In some embodiments of the present disclosure, the heating rate can be 5 K/min, 6 K/min, 7 K/min, 8 K/min, 9 K/min, 10 K/min, 11 K/min, 12 K/min, 13 K/min, 14 K/min, or 15 K/min, or a numerical value within a numerical range formed with any two of the above values as endpoints, as long as the glass ceramic for chemical strengthening with the performance required by the present disclosure can be obtained.

In some embodiments of the present disclosure, in step (3), the salt bath used for chemical strengthening treatment is a molten salt comprising potassium salt and/or sodium salt. The potassium salt comprises one or more selected from the group consisting of potassium nitrate, potassium sulfate, and potassium carbonate, preferably potassium nitrate. The sodium salt comprises at least one selected from the group consisting of sodium nitrate, sodium sulfate, and sodium carbonate, preferably sodium nitrate. Preferably, the temperature T₃ of the salt bath used for chemical strengthening treatment is 380°C to 600°C, preferably T₃ is 400°C to 550°C, more preferably T₃ is 400°C to 500°C. In some embodiments of the present disclosure, the temperature T₃ of the salt bath used for chemical strengthening treatment can be 380°C, 400°C, 425°C, 450°C, 475°C, 500°C, 525°C, 550°C, 575°C, or 600°C, or a numerical value within a numerical range formed with any two of the above values as endpoints, as long as the strengthened glass ceramic with the performance required by the present disclosure can be obtained. Preferably, the time t₃ of the chemical strengthening treatment is 1 h to 48 h, preferably t₃ is 2 h to 24 h, more preferably t₃ is 2 h to 15 h. In some embodiments of the present disclosure, the time t₃ of the chemical strengthening treatment can be 1 h, 4 h, 8 h, 12 h, 16 h, 20 h, 24 h, 28 h, 32 h, 36 h, 40 h, 44 h, or 48 h, or a numerical value within a numerical range formed with any two of the above values as endpoints, as long as the strengthened glass ceramic with the performance required by the present disclosure can be obtained. In some embodiments of the present disclosure, a given amount, for example, 0 wt% to 0.5 wt%, of lithium salt can be added to the salt bath. By employing the above chemical strengthening treatment process scheme to strengthen the glass ceramic for chemical strengthening with a specific composition and structure, a strengthened glass ceramic with excellent surface stress characteristics and excellent deep-layer stress characteristics can be obtained, this is done so as to ensure that the obtained strengthened glass ceramic has a high mechanical strength and excellent damage resistance performance.

It should be understood that during chemical strengthening treatment, one-step chemical strengthening treatment can be performed, or two-step or multi-step chemical strengthening treatment can be performed. In the present disclosure, the temperature of the chemical strengthening treatment is the temperature of the salt bath; when the chemical strengthening treatment includes two or more steps, the time of the chemical strengthening treatment is the sum of the time of each step of chemical strengthening treatment. In some embodiments of the present disclosure, when the chemical strengthening treatment includes two or more steps, the temperature and time of each step of chemical strengthening treatment can be the same or different.

In the present disclosure, the stress distribution structure possessed by the strengthened glass ceramic is closely related to the composition of the glass ceramic for chemical strengthening (including oxide composition, crystalline phase composition), the composition of the salt bath, the temperature of the salt bath, and the time of chemical strengthening treatment. Only when a glass ceramic for chemical strengthening with a specific composition is chemically strengthened in a suitable salt bath (suitable composition and suitable temperature) for a suitable time can the prepared strengthened glass ceramic obtain a specific stress distribution structure, thereby achieving the excellent effects expected in the present disclosure.

In the present disclosure, the glass device with a high strength can be prepared from the strengthened glass ceramic according to any of the preceding embodiments. For example, the glass device can include, but is not limited to, work surfaces, other surfaces, appliance doors, floor tiles, wall panels, storage containers, mobile phone screens, mobile phone back panels, electronic device frames, vehicle windshields, aircraft windshields, or vessel windshields, etc. The strengthened glass ceramic provided by the present disclosure has a high mechanical strength and high damage resistance performance, especially excellent drop impact resistance performance. Therefore, the glass device provided by the present disclosure also has excellent mechanical properties.

In the present disclosure, the strengthened glass ceramic according to any of the preceding embodiments can be applied in electronic device.

In some embodiments of the present disclosure, the electronic device includes at least one selected from the group consisting of a mobile phone, a tablet computer, a smart wearable, a display, and a television. For example, the electronic device can include, but is not limited to, a mobile phone, a tablet computer, a smart wearable, a display, or a television, etc. The smart wearable can include, but are not limited to, electronic watches, smart bracelets, smartwatches, smart glasses, etc. The display can include, but are not limited to, high-definition displays, vehicle-mounted displays, aviation-mounted displays, etc. For example, the electronic device can include a housing and electronic components partially located within the housing. The housing includes a front surface, a rear surface, and side surfaces. The electronic components include a display device, which is located at or adjacent to the front surface of the housing. The strengthened glass ceramic provided by the present disclosure can be applied to the front surface and/or rear surface and/or side surfaces of the housing. In some embodiments of the present disclosure, the front surface and/or rear surface of the housing can be of uniform thickness or non-uniform thickness. In some embodiments of the present disclosure, the front surface and/or rear surface of the housing can be 2D, 2.5D, 3D, or irregularly shaped.

### Test methods:

### 1. X-ray diffraction (XRD) test

The sample to be tested was crushed and ground into a sample with a particle size of less than 75 µm. The ground sample was tested using an X-ray diffractometer to obtain the XRD diffraction peak curve and XRD diffraction data. The XRD diffraction data were then analyzed using JADE Standard 8.6 software to obtain the crystalline phases of the sample. The X-ray diffractometer was Shimadzu XRD-6100, with 2θ=10° to 80°, scanning speed of 6°/min, operating voltage of 40 kV, and operating current of 30 mA. The sample to be tested was the glass ceramic for chemical strengthening or the strengthened glass ceramic.

Average crystal size: Based on the result data obtained from the XRD test, the average crystal size of the sample can be calculated according to the Scherrer formula D=Kλ/(βcosθ). Where λ is the X-ray wavelength, λ=0.154056 nm, β is the full width at half maximum of the diffraction peak, K=0.89, and θ is the Bragg diffraction angle. Specifically, the RAW file (diffraction pattern) output by the XRD instrument was subjected to curve fitting in JADE Standard 8.6 software. Jade output a fitting report. According to the 2θ value and Peak FWHM value corresponding to each diffraction peak in the fitting report, and converting the Peak FWHM value to the radian system: β = (FWHM/180 × 3.14), the crystal size for each diffraction peak was calculated using the Scherrer formula D=Kλ/(βcosθ) and then averaged to obtain the average crystal size.

Average crystal size of the (Zn, Mg)Al₂O₄ crystalline phase: The RAW file (diffraction pattern) output by the XRD instrument was subjected to phase retrieval and curve fitting in JADE Standard 8.6 software. In the output fitting report, the 2θ values and Peak FWHM values corresponding to three diffraction peaks of the (Zn, Mg)Al₂O₄ crystalline phase within the 2θ angle ranges of 34° to 38°, 44° to 46°, and 64° to 67° were selected. The Peak FWHM values were converted to the radian system: β = (FWHM/180 × 3.14). The crystal sizes for the three diffraction peaks were calculated using the Scherrer formula D=Kλ/(βcosθ) and then averaged to obtain the average crystal size of the (Zn, Mg)Al₂O₄ crystalline phase. Where λ is the X-ray wavelength, λ=0.154056 nm, β is the full width at half maximum of the diffraction peak, K=0.89, and θ is the Bragg diffraction angle.

Crystal phase content: The XRD test results (RAW format) were imported into JADE Standard 8.6 software for fitting and calculation to obtain the content of each crystalline phase in the glass ceramic, and then the total crystalline phase content in the glass ceramic was calculated. The ratio of the fitted peak area of a crystalline phase to the total fitted peak area is the crystalline phase content of that crystalline phase. The ratio of the fitted peak area of the (Zn, Mg)Al₂O₄ crystalline phase to the total fitted peak area is the crystalline phase content W_{[(Zn, Mg)Al2O4]} of the (Zn, Mg)Al₂O₄ crystalline phase; the ratio of the fitted peak area of the tetragonal ZrO₂ crystalline phase to the total fitted peak area is the crystalline phase content W_{[ZrO2]} of the tetragonal ZrO₂ crystalline phase. Based on W_{[(Zn, Mg)Al2O4]} and W_{[ZrO2]}, the ratio (mass ratio Z) of the (Zn, Mg)Al₂O₄ crystalline phase to the tetragonal ZrO₂ crystalline phase and the total crystalline phase content W were calculated.

Peak intensity ratio: The XRD test results (RAW format) were imported into JADE Standard 8.6 software, and the peak values were found to determine the 2θ position of the peak and the corresponding original intensity, and then the peak intensity ratio was calculated. Specifically, it is the peak intensity ratio X of the first characteristic peak to the second characteristic peak.

Full width at half maximum: The XRD test results (RAW format) were imported into JADE Standard 8.6 software for phase retrieval and curve fitting. In the output fitting report, the 2θ position of the peak, the corresponding crystal plane, the full width at half maximum, and the fitted intensity were obtained. The ratio was calculated based on the fitted intensity of the corresponding crystal plane.

Specifically, it includes a fitted peak intensity I_{[400]} of the characteristic peak of [400] crystal plane, a fitted peak intensity I_{[311]} of the characteristic peak of [311] crystal plane, a fitted peak intensity I_{[440]} of the characteristic peak of [440] crystal plane, the full width at half maximum W_{[400]} of the characteristic peak of [400] crystal plane, the full width at half maximum W_{[311]} of the characteristic peak of [311] crystal plane, the full width at half maximum W_{[440]} of the characteristic peak of [440] crystal plane, I_{[400]}/I_{[311]} and I_{[440]}/I_{[311]}.

Considering the influence of noise on peak finding during the test, smoothing operations not exceeding three times can be performed on the XRD diffraction peak curve.

### 2. |CT_AV|, DOL_0, CS_50, and |CT_CV| test

The stress meter SLP-2000 (also known as the scattered light photoelastic stress meter) was used for testing. The light source wavelength was 518 nm, SOC=25.5 (nm/cm)/MPa, refractive index=1.60, exposure time: 300 µsec.

When testing surface CS_50, |CT_AV|, DOL_0, and |CT_CV|, a conduction liquid needed to be dropped onto the stress meter first. Then the strengthened glass ceramic sample to be tested was wiped clean and placed on the test path to test its stress value. The stress meter was SLP-2000, and the conduction liquid used had a refractive index of 1.51.

### 3. Thickness test

A micrometer was used to test the thickness of the glass ceramic for chemical strengthening.

It should be understood that during chemical strengthening treatment, the degree of ion exchange in the thickness direction of the glass ceramic for chemical strengthening changes in a gradient from the surface to the center. The total increment in the exchange amount (mass) of Na-K and/or Li-Na generally does not exceed 1% of the total mass of the sample. Therefore, the expansion effect in the thickness direction is extremely slight. That is, before and after chemical strengthening, the thickness change of the glass ceramic for chemical strengthening is very small, and it can be approximately considered that the thickness is substantially unchanged.

### 4. Optical performance test

The sample to be tested was cleaned in an ultrasonic cleaner. The cleaning conditions included: cleaning time: 10 min; cleaning agent used: detergent diluted 10 times; cleaning temperature: 55±10°C; cleaning frequency: 30±10 kHz. Then the transmittance of the sample to be tested at different wavelengths was tested using a haze meter, with reference to the standard "GB/T 7962.12-2010 Test methods for colorless optical glass Part 12: Spectral internal transmittance". The haze meter used in the present disclosure was the Konica Minolta spectrophotometer CM-3600A. The sample to be tested was the glass ceramic for chemical strengthening or the strengthened glass ceramic.

### 5. Vickers hardness HV test

A strengthened glass ceramic sample with a clean surface free from visible scratches, pits, cracks, and other damage was selected as the specimen. The digital micro-Vickers hardness tester VTD405 (Beijing Wowei Technology Co., Ltd.) was used. According to the national standard GB/T 37900-2019 "Test method for hardness and fracture toughness of ultra-thin glass-Low load Vickers hardness indentation method", the Vickers hardness of the strengthened glass ceramic was tested. The load was 300 gf, the load time was 10 s, and the validity of the indentation complied with the national standard GB/T 16534-2009 "Test method for hardness of fine ceramics at room temperature". In the present disclosure, when testing Vickers hardness, a strengthened glass ceramic sample with dimensions of 50 mm × 50 mm × 0.7 mm was tested. Measurements were taken at three different positions on the same sample surface, and the average value was selected as the final test result.

### 6. Surface K₂O concentration content test

In the present disclosure, the surface K₂O concentration of the strengthened glass ceramic was measured by X-ray fluorescence spectrometer (XRF). The equipment model used was (Thermo Scientific ARL PERFORM'X), with a target of Rh (rhodium), X-ray tube voltage of 40 kW, current of 60 mA, collimator of 0.15, crystal selection of LiF200, detector selection of FPC, test range of a 29 mm circle, and analysis software of UniQuant standardless analysis. Specifically, a content of K element on the surface of the strengthened glass ceramic was measured by X-ray fluorescence spectrometer (XRF), and then the surface K₂O concentration was calculated. The calculation method was: surface K₂O concentration = (surface K element content × relative molecular mass of K₂O) / (relative atomic mass of K element × 2). It should be understood that surface K element content = mass of K element / total mass of elements, and total mass of elements = total mass of oxides.

That is, the surface K₂O concentration of the strengthened glass ceramic is the ratio of the mass of K₂O to the total mass of oxides. Among them, oxides include SiO₂, Al₂O₃, ZrO₂, Na₂O, K₂O, etc., which can be accurately tested by XRF, and do not include the content of oxides such as B₂O₃ that cannot be accurately tested by XRF. During XRF testing, standardless testing was used, and the concentration of elements with atomic number 6 and below or their oxides in the strengthened glass ceramic was not tested. That is, when XRF tests the surface K₂O concentration of the strengthened glass ceramic, the total mass of oxides measured does not include the mass of elements with atomic number 6 and below or their oxides in the strengthened glass ceramic.

### 7. Average sandpaper drop resistance height test

The average sandpaper drop resistance height refers to: the sum of the sandpaper drop resistance height measured for each sample among multiple strengthened glass ceramic samples from the same Example or the same Comparative Example, divided by the number of strengthened glass ceramic samples, which can be used to characterize the drop damage resistance performance of the strengthened glass ceramic. Ten identical strengthened glass ceramic samples were taken for testing in each batch. The average sandpaper drop resistance height was: $\left〈h\right〉 n = \frac{1}{n} {\sum }_{i = 1}^{n} hi$ wherein, n is the number of strengthened glass ceramic samples tested per batch, and hi is the sandpaper drop resistance height of a single sample tested.

Specifically, the test method for the sandpaper drop resistance height of a single sample was as follows:
Step 1: 80-mesh sandpaper was attached to the lower surface of a 160g model machine, and the model machine was placed on a LvTu LT-SKDL-CD type drop tester;
Step 2: the strengthened glass ceramic sample to be tested, with dimensions of 50mm × 50mm × 0.7mm, was placed directly below the model machine, so that the strengthened glass ceramic sample faced the sandpaper. Specifically, the main surface of the strengthened glass ceramic was oriented towards the sandpaper. The model machine was made to impact and dropped from a given drop height to impact the strengthened glass ceramic sample located directly below it. If the strengthened glass ceramic sample was not broken, the drop height of the model machine was increased according to a given rule. For example, starting from a drop height of 0.4 m, the sample was subjected to one drop impact. If it was not broken, the height was increased by 0.1 m each time for another drop until the strengthened glass ceramic sample broke;
Step 3: the drop height immediately before the glass sample broke was recorded as the sandpaper drop resistance height. For example, if the drop height was increased by 0.1 m each time, and the drop height at breakage was 0.5 m, then the sandpaper drop resistance height of the sample was 0.4 m.

### 8. Density

In the present disclosure, the density of the strengthened glass ceramic was tested using the electronic density balance SD-200L from ALFA MIRAGE, Japan. The testing principle is the "Archimedes drainage method".

### 9. Fracture toughness test

The test was conducted according to the national standard GB/T 37900-2019 "Test method for hardness and fracture toughness of ultra-thin glass-Low load Vickers hardness indentation method". Specifically, indentations were prepared using the same method as for measuring Vickers hardness. The crack lengths 2C₁ and 2C₂ in the diagonal directions of the indentation were measured, and their maximum value must not exceed the thickness of the strengthened glass ceramic. At least five effective indentation morphologies were measured on the surface of one sample, and their average value was calculated as the final result value for that sample.

The formula for calculating indentation fracture toughness is: $IFR = 0.026 \left[E⋅\frac{F}{\frac{\left(2{C}_{1}+2{C}_{2}\right)}{4}}\right] ⋅ \frac{{d}_{1} + {d}_{2}}{2 {C}_{1} + 2 {C}_{2}}$ wherein, IFR: indentation fracture toughness, unit is megapascal square root meter (MPa·m^{1/2}); E: elastic modulus of the specimen, unit is gigapascal (GPa); 2C₁, 2C₂: crack propagation length in the diagonal direction of the indentation, unit is millimeter (mm); d₁, d₂: diagonal length of the indentation, unit is millimeter (mm); F: test load value, unit is newton (N).

In the above test methods, after shaping, cutting, and polishing the strengthened glass ceramic bricks from the Examples and Comparative Examples, strengthened glass ceramic samples (e.g., polished sheets) with desired dimensions could be obtained for testing, such as glass ceramic polished sheets with dimensions of 50 mm × 50 mm × 0.7 mm.

### Example 1

### <Preparation of base glass>

Batching was performed according to the glass production raw material formula converted from formula 1 in Table 1. The total mass of the prepared raw materials was 1000 g. They were then mixed in a V-type mixer for 30 minutes. After mixing, 5 g of the clarifying agent NaCl was added. The mixture was then transferred to a platinum crucible and melted in a lift furnace (model: SJF1750, manufacturer: Nanjing Boyuntong Instrument Technology Co., Ltd.) at 1650°C for 5 hours. The melt was then poured into a preheated stainless steel mold at 300°C for forming and cooling. It was cooled to 900°C and then placed in an annealing furnace at 600°C for annealing for 24 hours. After that, it was cooled with the furnace to room temperature to obtain the base glass.

### <Preparation of glass ceramic for chemical strengthening>

The base glass prepared above was subjected to heat treatment in a resistance furnace (equipment model: SLX1400-40, manufacturer: Shanghai Shengli Testing Instrument Co., Ltd.) to obtain the glass ceramic for chemical strengthening. Based on the mole percentage of oxides, the composition of the prepared glass ceramic for chemical strengthening was the same as that of the base glass, as detailed in Table 1.

Specifically, a two-step heat treatment process was employed. First, the temperature was raised to the nucleation treatment temperature for nucleation treatment, and then the temperature was raised to the crystallization treatment temperature for crystallization treatment. The heating rate during nucleation treatment and crystallization was 10 K/min. Among them, the nucleation treatment temperature T₁ was 740°C, and the nucleation treatment time t₁ was 480 min; the crystallization treatment temperature T₂ was 800°C, and the crystallization treatment time t₂ was 10 min.

As needed, the glass ceramic for chemical strengthening was sequentially subjected to cutting, CNC machining (computer numerical control, i.e., numerically controlled machine tool; the CNC instrument equipment model used in the present disclosure is: RCG500S), and polishing to obtain smooth glass ceramic sheets for chemical strengthening of the required specifications. In the present disclosure, the processed glass ceramic sheets for chemical strengthening had specifications of 50mm × 50mm × 0.7mm.

### <Preparation of strengthened glass ceramic>

The glass ceramic for chemical strengthening was placed in a 100 wt% NaNO₃ salt bath at 450°C for the first-step strengthening treatment for 3 hours, and then placed in a 100 wt% KNO₃ salt bath at 430°C for the second-step strengthening treatment for 2 hours to obtain the strengthened glass ceramic.

### Examples 2 to 8

Except that the relevant preparation parameters were adjusted according to Table 2, the rest was the same as in Example 1. The corresponding formulas in Table 2 are detailed in Table 1.

### Examples 9 to 10

Except that the corresponding glass ceramics for chemical strengthening were placed in a 100 wt% NaNO₃ salt bath at 450°C for 4 hours to obtain the corresponding strengthened glass ceramics according to Table 5, the rest was the same as in Example 1.

### Comparative Examples 1 to 11

Except that the relevant preparation parameters were adjusted according to Table 2, the rest was the same as in Example 1. The corresponding formulas in Table 2 are detailed in Table 1.

### Comparative Examples 12 to 15

Except that the corresponding glass ceramics for chemical strengthening were placed in a 100 wt% NaNO₃ salt bath at 450°C for 4 hours to obtain the corresponding strengthened glass ceramics according to Table 5, the rest was the same as in Example 1.

The formulas of each Example and Comparative Example are shown in Table 1, and the preparation parameters and performance tests of each Example and Comparative Example are shown in Tables 2 to 5.

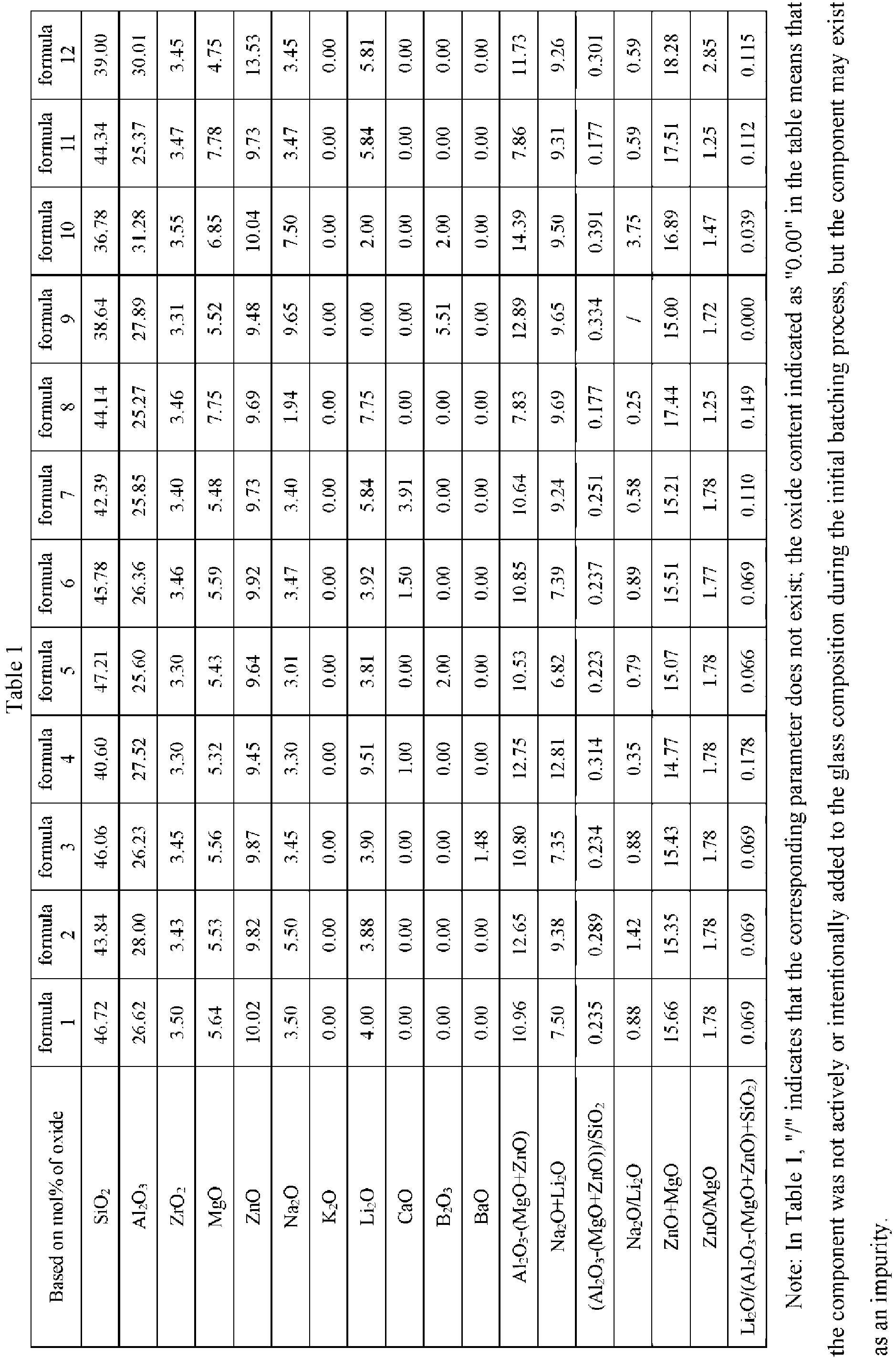

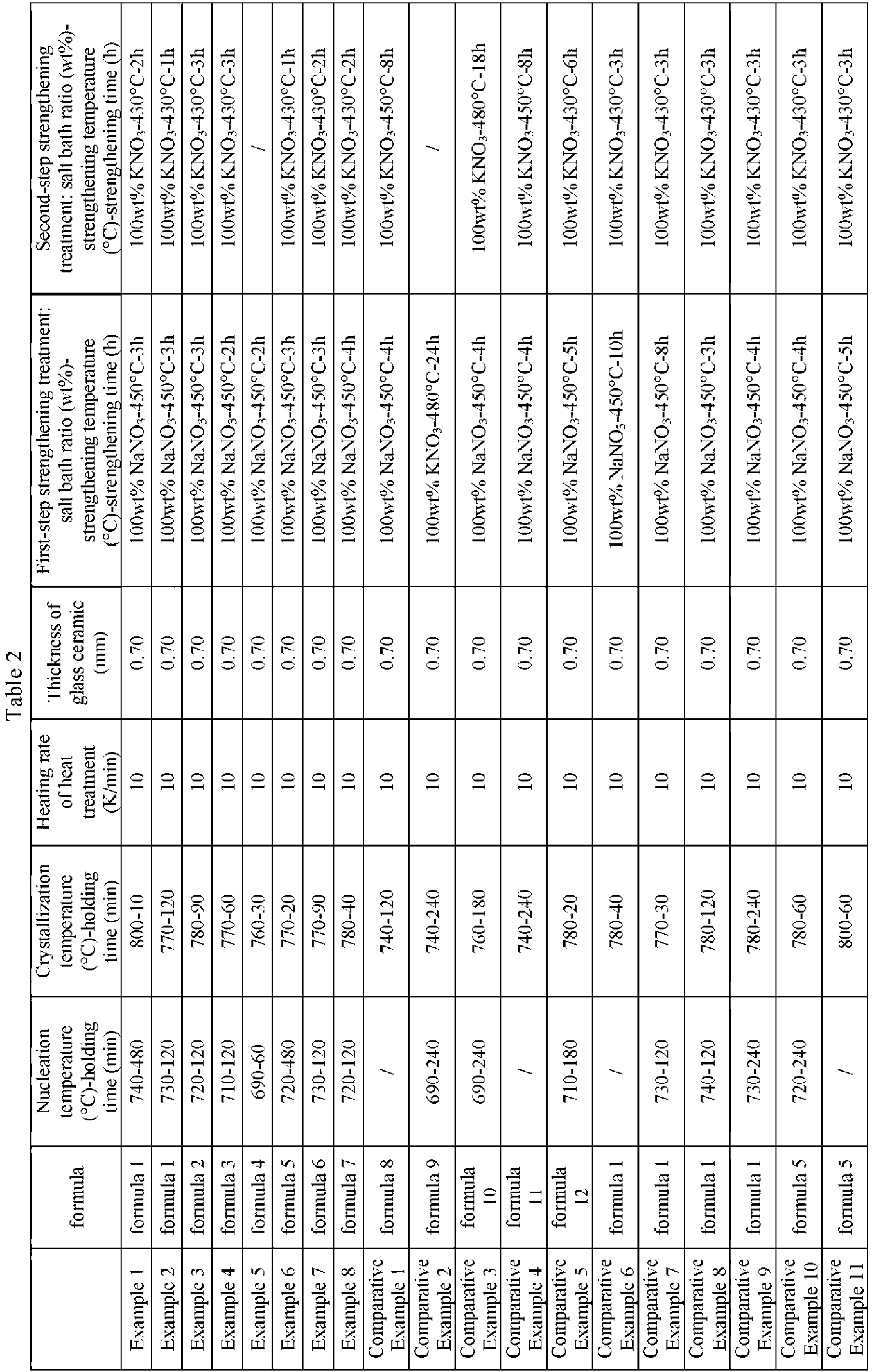

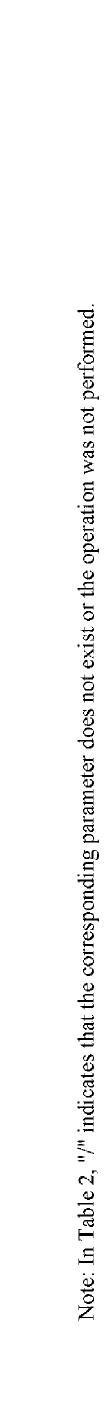

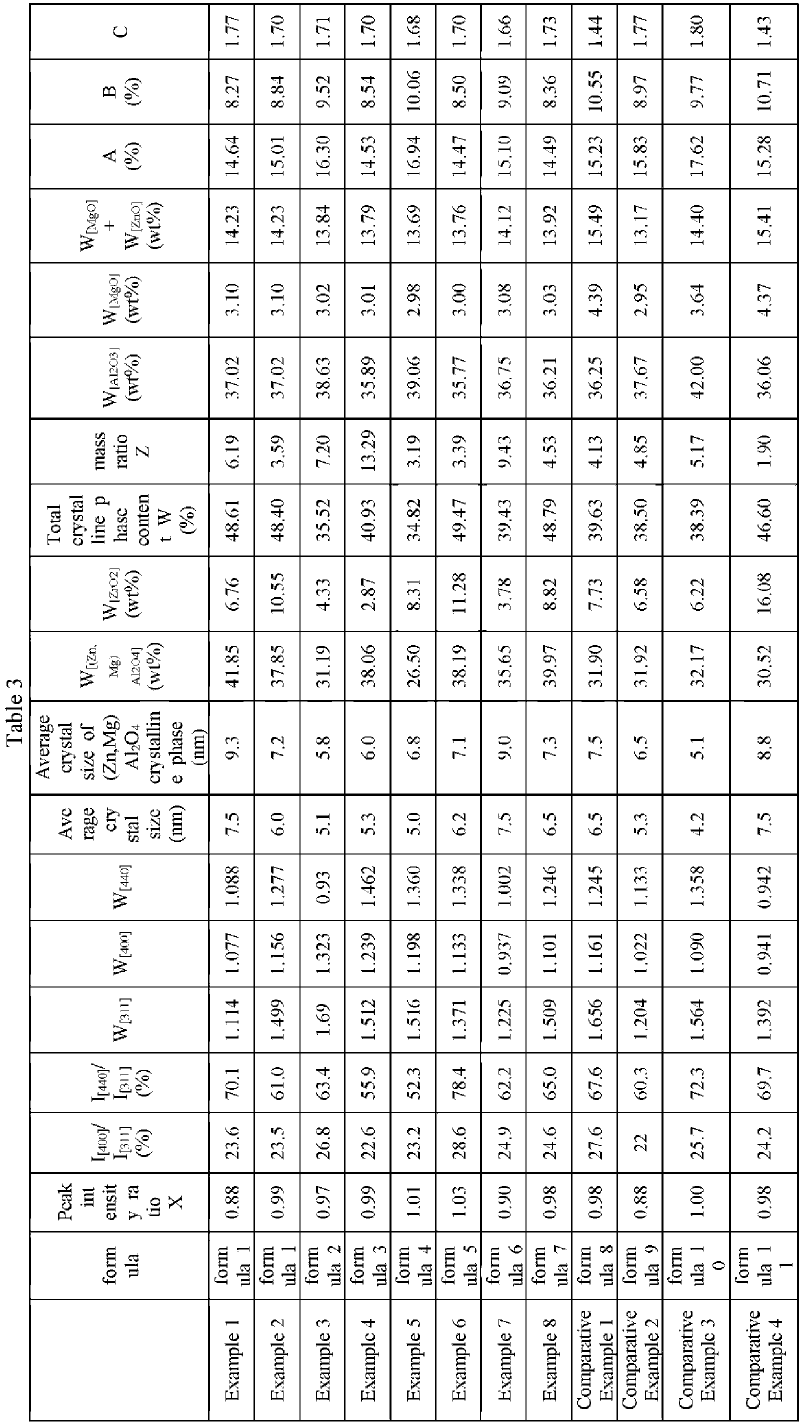

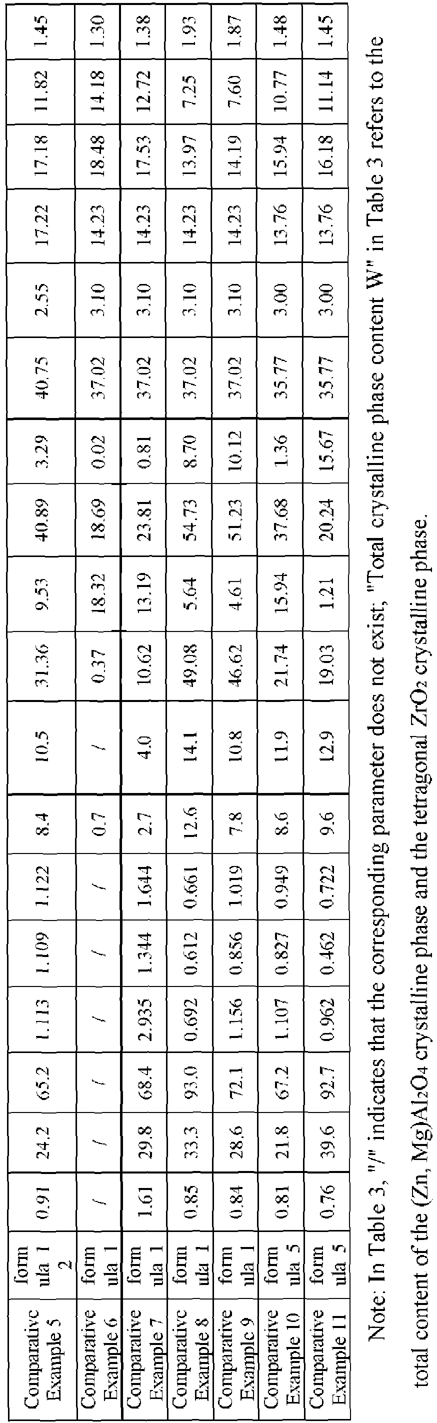

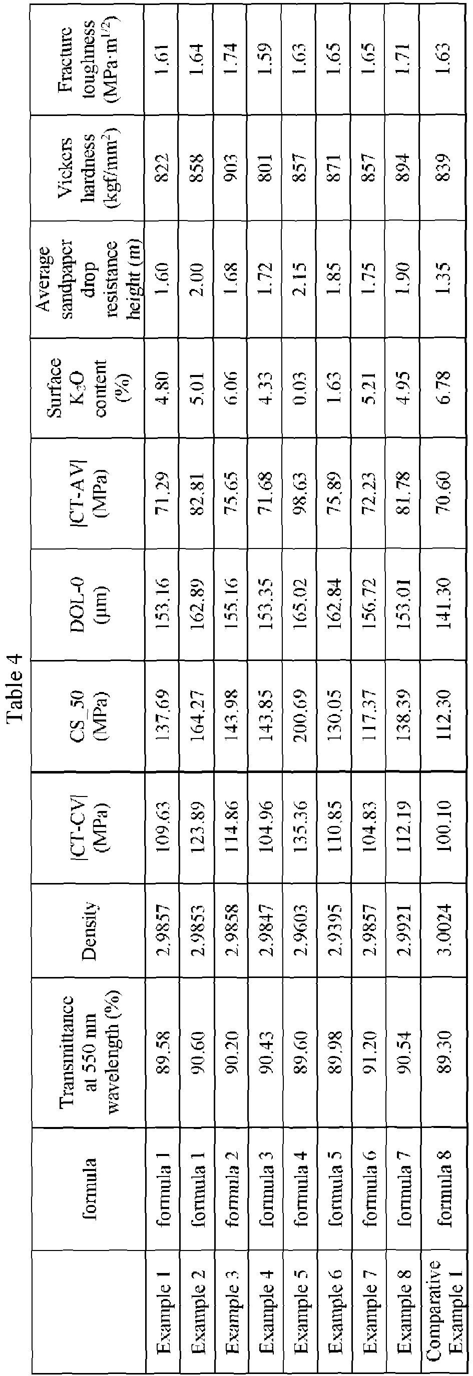

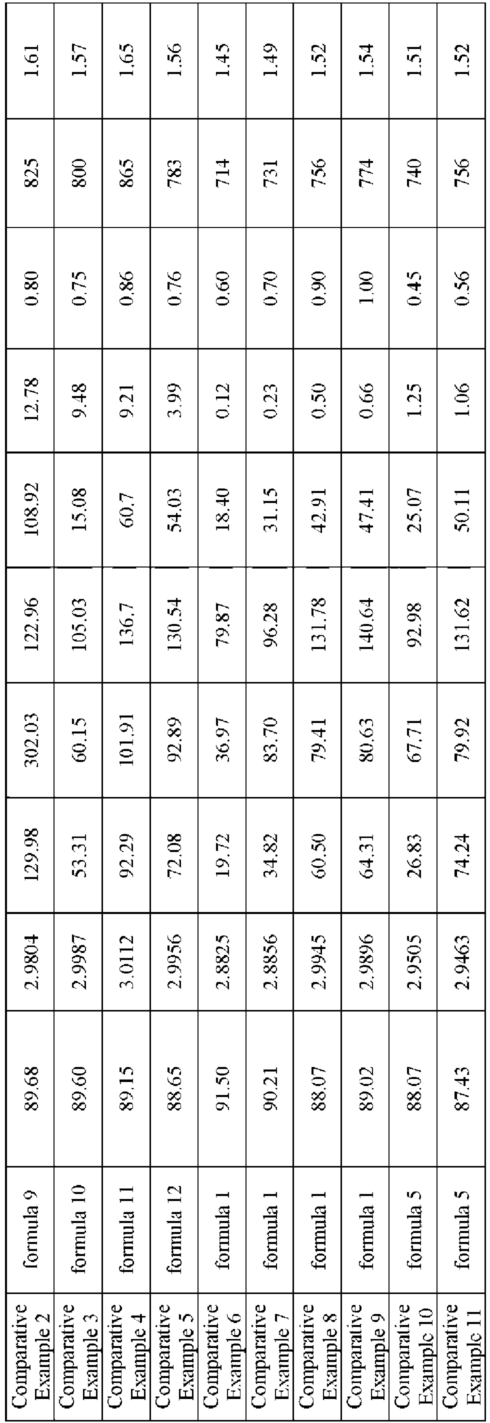

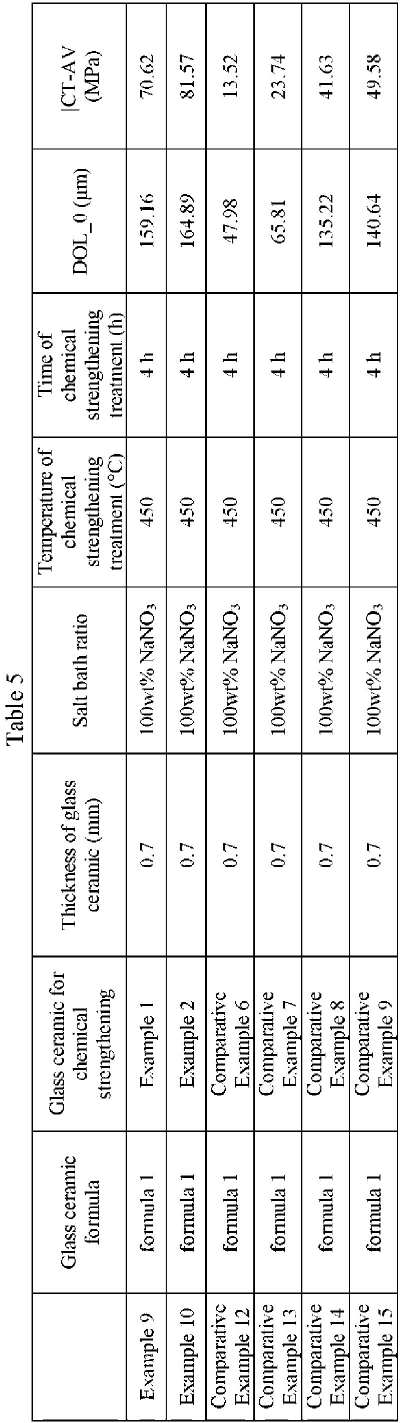

According to the tests, the glass ceramics for chemical strengthening in Examples 1 to 8 and Comparative Examples 1 to 11 all comprise the main crystalline phase of the (Zn, Mg)Al₂O₄ crystalline phase and the secondary crystalline phase of the tetragonal ZrO₂ crystalline phase. The XRD patterns of some Examples and Comparative Examples are shown in FIGs. 2 to 6 and FIG. 8.

Referring to Tables 1 to 4, the DOL_0 and |CT_AV| of the strengthened glass ceramics in Examples 1 to 8 are all within the scope of the present disclosure, while at least one of DOL_0 and |CT_AV| in Comparative Examples 1 to 11 is not within the scope of the present disclosure. The strengthened glass ceramics in the Examples of the present disclosure simultaneously have higher Vickers hardness, higher fracture toughness, and higher average sandpaper drop resistance height, indicating that the strengthened glass ceramics obtained in the Examples of the present disclosure have higher mechanical strength. Meanwhile, the glass ceramics for chemical strengthening in the Examples have a light transmittance greater than 89.00% at a wavelength of 550 nm, so the produced strengthened glass ceramics also have excellent transparency. Specifically, as shown in FIG. 7, the glass ceramic for chemical strengthening in Example 1 has a transmittance of greater than 80.00% to visible light, so the obtained strengthened glass ceramic is transparent within the visible light range.

Examples 1 and 2 and Comparative Examples 6 to 9 all obtained glass ceramics for chemical strengthening by applying different heat treatment schemes to base glasses with the composition of formula 1. Their XRD diffraction patterns are shown in FIG. 2.

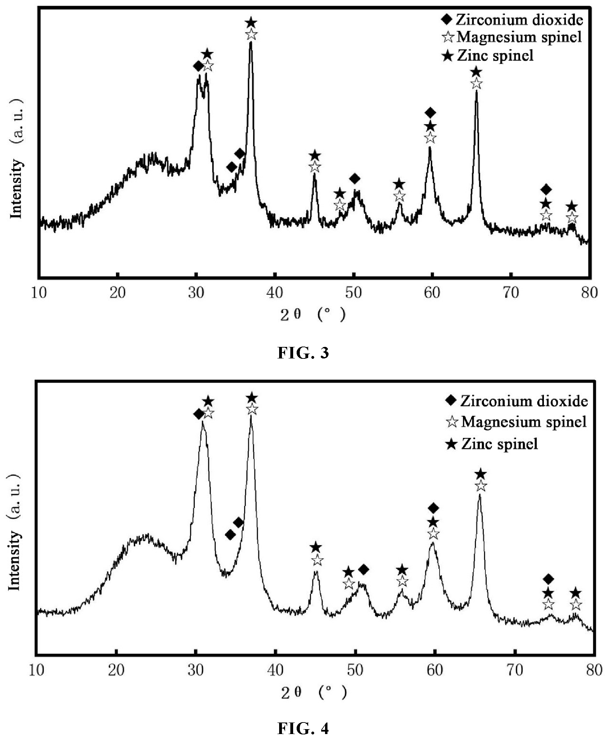

Referring to FIG. 2 and Table 3, in the XRD pattern of Comparative Example 6, there is no second characteristic peak within the 2θ angle range of 36° to 38°; therefore, it does not have a peak intensity ratio X. The (Zn, Mg)Al₂O₄ crystalline phase content in the glass ceramic for chemical strengthening of Comparative Example 6 is relatively low, and the calculation result of formula C does not meet the scope of the present disclosure. The stress level of the strengthened glass ceramic produced in Comparative Example 6 is relatively low. Referring to FIG. 2 and Table 3, the peak intensity ratio X of the XRD pattern of Comparative Example 7 is 1.61. The (Zn, Mg)Al₂O₄ crystalline phase content in the glass ceramic for chemical strengthening of Comparative Example 7 is relatively low, the full width at half maximum of some characteristic peaks of crystal plane does not meet the requirements of the present disclosure, and the calculation result of formula C also does not meet the scope of the present disclosure. The stress level of the strengthened glass ceramic produced in Comparative Example 7 is also relatively low. Referring to FIGs. 2 and 3, in the XRD pattern of Comparative Example 8, peak splitting appears within the 2θ angle range of 28° to 32°. The (Zn, Mg)Al₂O₄ crystalline phase content in the glass ceramic for chemical strengthening of Comparative Example 8 is relatively high, the average crystal size of the (Zn, Mg)Al₂O₄ crystalline phase is relatively high, the full width at half maximum of the characteristic peaks of crystal plane does not meet the requirements of the present disclosure, and the calculation result of formula C also does not meet the scope of the present disclosure. The stress level of the strengthened glass ceramic produced in Comparative Example 8 is relatively low. Referring to FIG. 2, in the XRD pattern of Comparative Example 9, peak splitting appears within the 2θ angle range of 28° to 32°. In the glass ceramic for chemical strengthening of Comparative Example 9, the (Zn, Mg)Al₂O₄ crystalline phase content is also relatively high, the average crystal size of the (Zn, Mg)Al₂O₄ crystalline phase is also relatively high, and the calculation result of formula C also does not meet the scope of the present disclosure. The stress level of the strengthened glass ceramic produced in Comparative Example 9 is also relatively low.

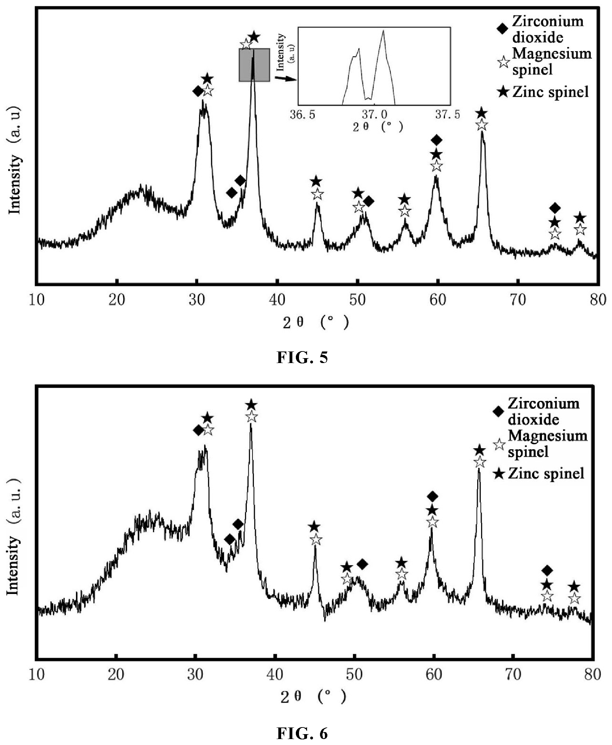

Comparative Examples 10 and 11 both obtained glass ceramics for chemical strengthening by applying different heat treatment schemes to base glasses with the composition of formula 5. Their XRD diffraction patterns are shown in FIGs. 5 and 6.

In the XRD pattern of Comparative Example 10, as shown in FIG. 5, peak splitting appears within the 2θ angle ranges of 28° to 32° and 36° to 38°. In the glass ceramic for chemical strengthening of Comparative Example 10, the average crystal size of the (Zn, Mg)Al₂O₄ crystalline phase is relatively high, and the calculation result of formula C also does not meet the scope of the present disclosure. The stress level of the strengthened glass ceramic produced in Comparative Example 10 is relatively low. In the XRD pattern of Comparative Example 11, as shown in FIG. 6, peak splitting appears within the 2θ angle range of 28° to 32°. In the glass ceramic for chemical strengthening of Comparative Example 11, the average crystal size of the (Zn, Mg)Al₂O₄ crystalline phase is relatively high, the full width at half maximum of some characteristic peaks of crystal plane does not meet the requirements of the present disclosure, the peak intensity ratio X does not meet the scope of the present disclosure, and the calculation result of formula C also does not meet the scope of the present disclosure. The stress level of the strengthened glass ceramic produced in Comparative Example 11 is relatively low.

Comparative Examples 12 to 15 and Examples 9 to 10 obtained glass ceramics for chemical strengthening by applying different heat treatment schemes to base glasses with the composition of formula 1. Using the same chemical strengthening treatment conditions, the depth of the compressive stress layer DOL_0 of the strengthened glass ceramics in Comparative Examples 12 to 15 is not within the scope of the present disclosure, and their drop impact resistance performance is inferior to that of the Examples of the present disclosure.

It should be noted that in this text, the terms "comprise", "include" or any other variations thereof are intended to cover non-exclusive inclusion, so that a process, method, article, or device that includes a series of elements not only includes those elements but also includes other elements not explicitly listed, or also includes elements inherent to such process, method, article, or device.

Each example in this specification is described in a related manner, and the same or similar parts among the examples can be referred to each other. Each example focuses on describing the differences from other examples.

The above descriptions are only preferable examples of the present disclosure and are not intended to limit the present disclosure. Any modifications, equivalent replacements, improvements, etc., made within the spirit and principles of the present disclosure shall be included within the protection scope of the present disclosure.

## Claims

1. A strengthened glass ceramic, wherein the strengthened glass ceramic comprises a main crystalline phase of a (Zn, Mg)Al₂O₄ crystalline phase and a secondary crystalline phase of a tetragonal ZrO₂ crystalline phase; the strengthened glass ceramic comprises a compressive stress layer region extending from a surface of the strengthened glass ceramic to a compression depth, and has a tensile stress layer region internally; the strengthened glass ceramic has a depth of the compressive stress layer DOL_0 ≥ 0.21t, preferably, 0.21t ≤ DOL_0 ≤ 0.25t, wherein t is a thickness of the strengthened glass ceramic; and the strengthened glass ceramic has a |CT_AV| ≥ 70 MPa, preferably, 70 MPa ≤ |CT_AV| ≤ 110 MPa.

2. The strengthened glass ceramic according to claim 1, wherein a total content of the (Zn, Mg)Al₂O₄ crystalline phase and the tetragonal ZrO₂ crystalline phase is 25.00 wt% to 70.00 wt%, preferably 30.00 wt% to 50.00 wt%, based on a mass of the strengthened glass ceramic, wherein a ratio of the (Zn, Mg)Al₂O₄ crystalline phase to the tetragonal ZrO₂ crystalline phase is 1.00 to 18.00, preferably 1.00 to 15.00; and/or, in the strengthened glass ceramic, an average crystal size of the (Zn, Mg)Al₂O₄ crystalline phase is 3.0 nm to 10.0 nm, preferably 4.0 nm to 7.5 nm, more preferably 4.5 nm to 7.5 nm; and/or, the strengthened glass ceramic is transparent within a visible light range.

3. The strengthened glass ceramic according to claim 1 or 2, wherein a composition at a center of the strengthened glass ceramic comprises: SiO₂ 35.00 mol% to 60.00 mol%, Al₂O₃ 20.00 mol% to 40.00 mol%, ZrO₂ 2.00 mol% to 8.00 mol%, MgO 3.00 mol% to 7.50 mol%, ZnO 7.00 mol% to 13.00 mol%, Na₂O 1.00 mol% to 10.00 mol%, and Li₂O 2.50 mol% to 10.00 mol%, based on a mole percentage of oxides.

4. The strengthened glass ceramic according to any one of claims 1 to 3, wherein the strengthened glass ceramic comprises 15.00 wt% to 45.00 wt% of the (Zn, Mg)Al₂O₄ crystalline phase based on the strengthened glass ceramic.

5. The strengthened glass ceramic according to any one of claims 1 to 4, wherein W_{[(Zn, Mg)Al2O4]} is a weight percentage of the (Zn, Mg)Al₂O₄ crystalline phase based on the strengthened glass ceramic, W_{[Al2O3]} is a weight percentage of Al₂O₃ based on the strengthened glass ceramic, W_{[MgO]} is a weight percentage of MgO based on the strengthened glass ceramic, and W_{[ZnO]} is a weight percentage of ZnO based on the strengthened glass ceramic, $A = \left(1-{W}_{\left[\left(Zn, Mg\right)Al2O4\right]}/2\right) \times {W}_{\left[Al2O3\right]} / 2 ,$ $B = \left(1-{W}_{\left[\left(Zn, Mg\right)Al2O4\right]}\right) \times \left({W}_{\left[MgO\right]}+{W}_{\left[ZnO\right]}\right) ,$ $C = A / B ,$ and in the strengthened glass ceramic, 1.50 ≤ C ≤ 1.85.

6. The strengthened glass ceramic according to any one of claims 1 to 5, wherein a value of A is 10.00% to 25.00%, preferably 14.00% to 25.00%; and/or,
a value of B is 7.50% to 12.50%, preferably 8.00% to 12.00%.

7. The strengthened glass ceramic according to any one of claims 1 to 6, wherein the strengthened glass ceramic has a CS_50 ≥ 100 MPa, preferably, 100 MPa ≤ CS_50 ≤ 250 MPa.

8. The strengthened glass ceramic according to any one of claims 1 to 7, wherein the strengthened glass ceramic has a Vickers hardness greater than or equal to 790 kgf/mm², preferably 790 kgf/mm² to 1000 kgf/mm².

9. The strengthened glass ceramic according to any one of claims 1 to 8, wherein the strengthened glass ceramic has a fracture toughness greater than or equal to 1.00 MPa·m^{1/2}, preferably greater than or equal to 1.20 MPa·m^{1/2}, more preferably greater than or equal to 1.55 MPa·m^{1/2}.

10. The strengthened glass ceramic according to any one of claims 1 to 9, wherein the strengthened glass ceramic has a |CT_CV| ≥ 80 MPa, preferably, 80 MPa ≤ |CT_CV| ≤ 150 MPa.

11. The strengthened glass ceramic according to any one of claims 1 to 10, wherein in an X-ray diffraction pattern of the strengthened glass ceramic, a peak with a maximum peak intensity among characteristic peaks within a 2θ angle range of 28° to 32° is a first characteristic peak, and a peak with a maximum peak intensity among characteristic peaks within a 2θ angle range of 36° to 38° is a second characteristic peak, a peak intensity ratio X of the first characteristic peak to the second characteristic peak is 0.80 to 1.50, preferably the peak intensity ratio X is 0.85 to 1.30.

12. The strengthened glass ceramic according to any one of claims 1 to 11, wherein in the X-ray diffraction pattern of the strengthened glass ceramic, a characteristic peak of [400] crystal plane of the (Zn, Mg)Al₂O₄ crystalline phase is located within a 2θ angle range of 44° to 46°, a characteristic peak of [311] crystal plane of the (Zn, Mg)Al₂O₄ crystalline phase is located within a 2θ angle range of 34° to 38°, and a characteristic peak of [440] crystal plane of the (Zn, Mg)Al₂O₄ crystalline phase is located within a 2θ angle range of 64° to 67°;
a full width at half maximum W_{[400]} of the characteristic peak of [400] crystal plane is 0.650° to 1.800°, preferably W_{[400]} is 0.900° to 1.600°;
a full width at half maximum W_{[311]} of the characteristic peak of [311] crystal plane is 0.900° to 2.800°, preferably W_{[311]} is 1.100° to 2.230°; and
a full width at half maximum W_{[440]} of the characteristic peak of [440] crystal plane is 0.750° to 2.000°, preferably W_{[440]} is 0.900° to 1.600°.

13. The strengthened glass ceramic according to any one of claims 1 to 12, wherein the composition at the center of the strengthened glass ceramic further comprises: K₂O 0.00 mol% to 5.00 mol%, CaO 0.00 mol% to 10.00 mol%, B₂O₃ 0.00 mol% to 10.00 mol%, and BaO 0.00 mol% to 5.00 mol%, based on the mole percentage of oxides.

14. The strengthened glass ceramic according to any one of claims 1 to 13, wherein the composition at the center of the strengthened glass ceramic comprises: SiO₂ 35.00 mol% to 60.00 mol%, Al₂O₃ 20.00 mol% to 40.00 mol%, ZrO₂ 2.00 mol% to 8.00 mol%, MgO 4.00 mol% to 7.00 mol%, ZnO 9.00 mol% to 12.00 mol%, Na₂O 2.00 mol% to 10.00 mol%, and Li₂O 3.00 mol% to 10.00 mol%, based on the mole percentage of oxides.

15. The strengthened glass ceramic according to any one of claims 1 to 14, wherein the composition at the center of the strengthened glass ceramic comprises: SiO₂ 35.00 mol% to 50.00 mol%, Al₂O₃ 25.00 mol% to 35.00 mol%, ZrO₂ 3.00 mol% to 5.00 mol%, MgO 4.00 mol% to 7.00 mol%, ZnO 9.00 mol% to 12.00 mol%, Na₂O 2.00 mol% to 10.00 mol%, and Li₂O 3.00 mol% to 10.00 mol%, based on the mole percentage of oxides.

16. The strengthened glass ceramic according to any one of claims 1 to 15, wherein the composition at the center of the strengthened glass ceramic satisfies:
1.30 ≤ ZnO/MgO ≤ 2.50; and/or,
0.05 ≤ Li₂O/(Al₂O₃-(MgO+ZnO)+SiO₂) ≤ 0.20; and/or,
0.19 ≤ (Al₂O₃-(MgO+ZnO))/SiO₂ ≤ 0.60; and/or,
0.26 ≤ Na₂O/Li₂O ≤ 3.00,
based on the mole percentage of each oxide in the composition of the strengthened glass ceramic.

17. The strengthened glass ceramic according to any one of claims 1 to 16, wherein the composition at the center of the strengthened glass ceramic further satisfies:
12.00 mol% ≤ ZnO+MgO ≤ 20.00 mol%, preferably, 13.00 mol% ≤ ZnO+MgO ≤ 17.30 mol%; and/or,
9.00 mol% ≤ Al₂O₃-(MgO+ZnO) ≤ 22.00 mol%, preferably, 10.00 mol% ≤ Al₂O₃-(MgO+ZnO) ≤ 20.00 mol%; and/or,
5.00 mol% ≤ Na₂O+Li₂O ≤ 15.00 mol%, preferably, 6.00 mol% ≤ Na₂O+Li₂O ≤ 13.50 mol%,
based on the mole percentage of each oxide in the composition of the strengthened glass ceramic.

18. The strengthened glass ceramic according to any one of claims 1 to 17, wherein a transmittance of the strengthened glass ceramic with a thickness of 0.7 mm at a wavelength of 550 nm is greater than or equal to 85.00%.

19. The strengthened glass ceramic according to any one of claims 1 to 18, wherein for the strengthened glass ceramic with a thickness of 0.7 mm, using 80-mesh sandpaper for drop resistance testing, an average sandpaper drop resistance height of the strengthened glass ceramic is greater than or equal to 1.00 m, preferably the average sandpaper drop resistance height is greater than or equal to 1.40 m, more preferably 1.50 m to 2.50 m.

20. The strengthened glass ceramic according to any one of claims 1 to 19, wherein the strengthened glass ceramic is obtained by performing chemical strengthening treatment on a glass ceramic for chemical strengthening, and a composition of the glass ceramic for chemical strengthening is the same as the composition at the center of the strengthened glass ceramic.

21. A glass device prepared from the strengthened glass ceramic according to any one of claims 1 to 20.

22. An electronic device, comprising the strengthened glass ceramic according to any one of claims 1 to 20.
